(19) **Europäisches Patentamt / European Patent Office / Office européen des brevets**

(11) **EP 2 952 285 A1**

(12) **EUROPEAN PATENT APPLICATION**
published in accordance with Art. 153(4) EPC

(43) Date of publication:
**09.12.2015 Bulletin 2015/50**

(21) Application number: **13873611.1**

(22) Date of filing: **25.12.2013**

(51) Int Cl.:
***B23K 35/30*** (2006.01)     ***B23K 35/362*** (2006.01)

(86) International application number:
**PCT/JP2013/084687**

(87) International publication number:
**WO 2014/119197 (07.08.2014 Gazette 2014/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.02.2013 JP 2013019562**

(71) Applicant: **Kabushiki Kaisha Kobe Seiko Sho (Kobe Steel, Ltd.)**
**Kobe-shi, Hyogo 651-8585 (JP)**

(72) Inventors:
• **SAKATA, Mikihiro**
  **Kanagawa 251-0014 (JP)**
• **YAMASHITA, Ken**
  **Kanagawa 251-0014 (JP)**
• **NAKO, Hidenori**
  **Kobe-shi**
  **Hyogo 651-2271 (JP)**

(74) Representative: **Müller-Boré & Partner**
**Patentanwälte PartG mbB**
**Friedenheimer Brücke 21**
**80639 München (DE)**

(54) **SUBMERGED ARC WELDING WIRE FOR HIGH-STRENGTH 2.25Cr-1Mo-V STEEL AND WELD METAL**

(57)     The purpose of the present invention is to provide: a submerged arc welding wire for high-strength 2.25Cr-1Mo-V steel, said submerged arc welding wire being capable of improving creep rupture strength without deteriorating toughness, temper embrittlement characteristics, SR cracking resistance and welding workability; and a weld metal. This welding wire is characterized by containing 0.11 to 0.18 mass% of C, 0.05 to 0.35 mass% of Si, 1.00 to 1.40 mass% of Mn, up to 0.015 mass% of P, up to 0.015 mass% of S, up to 0.07 mass% of Ni, up to 0.07 mass% of Co, 2.00 to 2.30 mass% of Cr, 0.90 to 1.20 mass% of Mo, up to 0.025 mass% of Ti, up to 0.025 mass% of Al, 0.33 to 0.43 mass% of V, 0.015 to 0.030 mass% of Nb, up to 0.05 mass% of W, and up to 0.0005 mass% of B, with the balance being Fe and unavoidable impurities.

EP 2 952 285 A1

**Description**

Technical Field

The present invention relates to a submerged arc welding wire for use in submerged arc welding of high-strength 2.25Cr-1Mo-V steel, which is used in a high-temperature and high-pressure environment such as a desulfurization reactor, and a weld metal.

Background Art

High-strength 2.25Cr-1Mo-V steel, which has good high-temperature properties, has been widely used as a material used in a high-temperature and high-pressure environment such as a desulfurization reactor. In order to produce a welding wire that can be used for welding of such 2.25Cr-1Mo-V steel for desulfurization reactors and a weld metal, development of a welding wire that enables a good creep rupture property to be achieved and a weld metal having a good creep rupture property has been studied.

For example, in PTL 1, while the Cr content in a welding wire is set to 1.80% to 3.80% by mass, the V content in the welding wire is set to 0.30% by mass or more and the Nb content in the welding wire is set to 0.005% by mass or more in order to increase creep strength. In PTL 2, while the Cr content in a wire is set to 1.80% to 3.80% by mass, (V in the wire + (V in a flux)/5) + 10(Ta in the wire + (Ta in the flux)/5) is set to 0.35 or more in order to increase creep strength. In PTL 3, while the Cr content in a welding wire is set to 2.00% to 3.25% by mass, the V content in the welding wire is set to 0.10% by mass or more and one or more elements selected from Nb, W, and Co are further added to the welding wire in combination in order to increase creep strength.

Citation List

Patent Literature

PTL 1: Japanese Unexamined Patent Application Publication No. 1-271096
PTL 2: Japanese Unexamined Patent Application Publication No. 3-258490
PTL 3: Japanese Unexamined Patent Application Publication No. 8-150478

Summary of Invention

Technical Problem

However, the techniques of the related art involve the following issues.

In the related art, in order to increase the creep rupture strength of a Cr-Mo steel weld metal, a strong carbide-forming element such as V, Nb, Ta, or W; Co; or the like has been added to the Cr-Mo system, which are the major components, in an additive manner as described above. However, this may reduce impact toughness and increase hardness, which results in degradation of cracking resistance.

Although a further high creep rupture strength has been anticipated with the revision of ASME in 2009, it is difficult to increase creep rupture strength using the materials of the related art.

The present invention was made in light of the above-described issues. An object of the present invention is to provide a submerged arc welding wire for high-strength 2.25Cr-1Mo-V steel which enables the creep rupture strength of a weld metal to be increased without a reduction in toughness or degradation of temper embrittlement property, SR cracking resistance, and welding workability and such a weld metal.

Solution to Problem

The inventors of the present invention have conducted extensive studies and, as a result, found the following facts.

Specifically, in order to form a 2.25Cr-1Mo-V steel deposited metal having a high creep strength, high toughness, a good temper embrittlement property, and high SR cracking resistance, the inventors have devised (1) controlling of the shape of carbide precipitates and (2) controlling of a microstructure as means for improving creep property.

The microstructures of 2.25Cr-1Mo-V steel and a weld metal deposited on 2.25Cr-1Mo-V steel are primarily composed of bainite, in which the behavior of creep deformation is primarily caused by the movement of dislocations and slip deformation that may occur at the prior-austenite grain boundaries and the bainite block, packet, and lath boundaries in the crystal grains. Occurrence of the former phenomenon may be reduced in an effective manner by dispersing a precipitate of a fine carbide, which inhibits the movement of dislocations, in crystal grains and maintaining the dispersed precipitate at a high temperature for a prolonged period of time. Occurrence of the latter phenomenon may be reduced in an effective manner by dispersing a precipitate of a carbide, which inhibits the slip deformation that may occur at the prior-austenite grain boundaries, and reducing the numbers of slip sites, that is, coarsening of the microstructure.

The above-described (1) may be achieved in an effective manner by adding an alloy element that causes a fine carbide to be preferentially formed in the crystal grains. In the present invention, attention was focused on C and V It was also found that reducing the Cr content may promote the precipitation of a fine carbide and allow the precipitated carbide to be maintained at a high temperature for a prolonged period of time. Thus, attention was focused on Cr.

The above-described (2) may be achieved in an effective manner by limiting the amount of alloy element to be added which enhances hardenability. In the present invention, attention was focused on Mn.

These findings that creep rupture strength may be markedly increased when the Cr content is set low as in the present invention, that is, when an alloy element content is limited to be low, have never been suggested in the related art.

A submerged arc welding wire for high-strength 2.25Cr-1Mo-V steel according to the present invention (hereinafter, referred to as "welding wire" or simply "wire", as appropriate) contains:

C: 0.11% to 0.18% by mass;
Si: 0.05% to 0.35% by mass;
Mn: 1.00% to 1.40% by mass;
P: $\leq$ 0.015% by mass;
S: $\leq$ 0.015% by mass;
Ni: $\leq$ 0.07% by mass;
Co: $\leq$ 0.07% by mass;
Cr: 2.00% to 2.30% by mass;
Mo: 0.90% to 1.20% by mass;
Ti: $\leq$ 0.025% by mass;
Al: $\leq$ 0.025% by mass;
V: 0.33% to 0.43% by mass;
Nb: 0.015% to 0.030% by mass;
W: $\leq$ 0.05% by mass; and
B: $\leq$ 0.0005% by mass,

with the balance being Fe and inevitable impurities.

The above-described welding wire, which contains specific components in the predetermined amounts, enables a weld metal having a high room-temperature strength, a high creep rupture strength, high toughness, high SR cracking resistance (i.e., low risk of intergranular cracking that may occur during stress relief annealing), and high corrosion resistance to be formed and enhances welding workability.

The creep rupture strength required in the present invention is specifically such that the amount of time between the end of a post-weld heat treatment (PWHT) of 705°C $\times$ 24 h or 705°C $\times$ 32 h and creep rupture at 540°C and 210 MPa exceeds 900 h. Welding workability is assessed in terms of slag detachability, bead wettability, and the like.

The submerged arc welding wire for high-strength 2.25Cr-1Mo-V steel according to the present invention is preferably used in combination with a sintered flux containing

MgO: 25% to 40% by mass,
$Al_2O_3$: 13% to 30% by mass,
$SiO_2$: 3% to 15% by mass,
metal fluoride in terms of F: 3% to 15% by mass,
metal carbonate in terms of $CO_2$: 3% to 15% by mass,
C: $\leq$ 0.10% by mass,
Si + Mn: $\leq$ 3.0% by mass,
Ni + Co + Cr + Mo + Ti + Al + V + Nb + W: < 1.0% by mass, and
total of B and boron oxide in terms of B: < 0.10% by mass.

Using the welding wire in combination with the above-described sintered flux containing the specific components in the predetermined amounts may enable a good bead shape to be achieved, increase the fluidity of slag, and enable the oxygen content to be controlled. This may further enhance the properties of the weld metal.

A weld metal according to the present invention is prepared by using the above-described welding wire for high-strength 2.25Cr-1Mo-V steel in combination with the above-described sintered flux. The weld metal contains:

C: 0.09% to 0.14% by mass;
Si: 0.05% to 0.35% by mass;
Mn: 1.00% to 1.30% by mass;
P: ≤ 0.015% by mass;
S: ≤ 0.015% by mass;
Ni: ≤ 0.06% by mass;
Co: ≤ 0.06% by mass;
Cr: 2.00% to 2.30% by mass;
Mo: 0.90% to 1.20% by mass;
Ti: ≤ 0.010% by mass;
Al: ≤ 0.010% by mass;
V: 0.30% to 0.40% by mass;
Nb: 0.012% to 0.022% by mass;
W: ≤ 0.05% by mass;
B: ≤ 0.0005% by mass; and
O: ≤ 0.045% by mass,

with the balance being Fe and inevitable impurities.

The above-described weld metal, which contains the specific components in the predetermined amounts, has a high room-temperature strength, a high creep rupture strength, high toughness, high SR cracking resistance, and high corrosion resistance and enhances welding workability.

Part of the chemical composition of the weld metal is specified by "ASME Sec. VIII Div. 2 3.4. Supplemenal Requirement for Cr-Mo Steels Table 3.2".

Advantageous Effects of Invention

The welding wire according to the present invention enables a weld metal having a good creep rupture property, high toughness, a good temper embrittlement property, high SR cracking resistance, and a high room-temperature strength to be formed. The welding wire according to the present invention also enhances welding workability.

The weld metal according to the present invention has a good creep rupture property, high toughness, a good temper embrittlement property, high SR cracking resistance, and a high room-temperature strength.

Brief Description of Drawings

[Fig. 1A] Fig. 1A is a schematic diagram illustrating the shape of a groove formed in a weld-testing specimen used in Examples of the present invention.
[Fig. 1B] Fig. 1B is a schematic diagram illustrating the shape of a groove formed in a weld-testing specimen used in Examples of the present invention.
[Fig. 2] Fig. 2 is a graph illustrating conditions under which a PWHT was performed in Examples of the present invention.
[Fig. 3] Fig. 3 is a graph describing conditions under which a step-cooling treatment was performed in Examples of the present invention.
[Fig. 4A] Fig. 4A is a schematic diagram for describing a test piece used for evaluating SR cracking resistance in Examples of the present invention.
[Fig. 4B] Fig. 4B is a schematic diagram for describing a test piece used for evaluating SR cracking resistance in Examples of the present invention.
[Fig. 4C] Fig. 4C is a schematic diagram for describing a test piece used for evaluating SR cracking resistance in Examples of the present invention.
[Fig. 4D] Fig. 4D is a schematic diagram for describing a test piece used for evaluating SR cracking resistance in Examples of the present invention.
[Fig. 5] Fig. 5 is a graph illustrating conditions under which SR was performed for evaluating SR cracking resistance in Examples of the present invention.

Description of Embodiments

Embodiments of the present invention are described in detail below.

«Welding Wire»

A welding wire according to the present invention contains C, Si, Mn, P, S, Ni, Co, Cr, Mo, Ti, Al, V, Nb, W, and B in the predetermined amounts with the balance being Fe and inevitable impurities.

The reasons for limiting the components are described below.

<C: 0.11% to 0.18% by Mass>

C is a component that is added to the welding wire in order to increase the room-temperature strength, creep rupture strength, and toughness of a weld metal. In order to set the C content in the weld metal to 0.09% to 0.14% by mass as described below, it is necessary to limit the C content in the wire to 0.11% to 0.18% by mass.

<Si: 0.05% to 0.35% by Mass>

Si is a component that is added to the welding wire in order to increase the room-temperature strength of a weld metal and cause deoxidation of the weld metal to occur. In order to set the Si content in the weld metal to 0.05 to 0.35 by mass as described below, it is necessary to limit the Si content to 0.05% to 0.35% by mass as well.

<Mn: 1.00% to 1.40% by Mass>

Mn is a component that is added to the welding wire in order to increase room-temperature strength and, in particular, toughness. Mn also causes deoxidation of a weld metal to occur similarly to Si. In order to set the Mn content in the weld metal to 1.00% to 1.30% by mass as described below (more preferably, the lower limit is 1.05% by mass and the upper limit is 1.28% by mass), it is necessary to limit the Mn content in the wire to 1.00% to 1.40% by mass (more preferably, the lower limit is 1.15% by mass and the upper limit is 1.35% by mass) as well.

<P: ≤ 0.015% by Mass and S: ≤ 0.015% by Mass>

P and S, which segregate at grain boundaries, are components that deteriorate temper embrittlement property and SR cracking resistance. In order to set the P content in the weld metal to 0.015% by mass or less and the S content in the weld metal to 0.015% by mass or less as described below, it is necessary to limit the P and S contents in the wire to 0.015% by mass or less as well.

Needless to say, reducing the content of impurities other than P or S, that is, Sn, Sb, As, Pb, and Bi, also enhances temper embrittlement property and SR cracking sensitivity in an effective manner. Thus, the contents of Sn, Sb, and As in the wire are each preferably limited to 0.005% by mass or less. The contents of Pb and Bi in the wire are each preferably limited to 0.0001% by mass or less.

<Ni: ≤ 0.07% by Mass and Co: ≤ 0.07% by Mass>

Ni and Co are components that increase toughness in an effective manner but may significantly reduce creep strength. In order to set the Ni content in the weld metal to 0.06% by mass or less and the Co content in the weld metal to 0.06% by mass or less as described below, it is necessary to limit the Ni and Co contents in the wire to 0.07% by mass or less.

<Cr: 2.00% to 2.30% by Mass>

Cr, which is one of the basic components of high-strength 2.25Cr-1Mo-V steel as well as Mo and V, is added to the welding wire in order to enhance corrosion resistance and increase room-temperature strength and creep rupture strength. In order to set the Cr content in the weld metal to 2.00% to 2.30% by mass as described below (more preferably, the lower limit is 2.00% by mass and the upper limit is 2.24% by mass), it is necessary to limit the Cr content in the wire to 2.00% to 2.30% by mass (more preferably, the lower limit is 2.05% by mass and the upper limit is 2.24% by mass).

<Mo: 0.90% to 1.20% by Mass>

Mo, which is one of the basic components of high-strength 2.25Cr-1Mo-V steel as well as Cr and V, is added to the welding wire in order to increase room-temperature strength and creep rupture strength. In order to set the Mo content in the weld metal to 0.90% to 1.20% by mass as described below, it is necessary to limit the Mo content in the wire to 0.90% to 1.20% by mass as well.

<Ti: ≤ 0.025% by Mass>

Ti is a component that may significantly reduce toughness even when added to the welding wire in a trace amount. In order to set the Ti content in the weld metal to 0.010% by mass or less as described below, it is necessary to limit the Ti content in the wire to 0.025% by mass or less.

<Al: ≤ 0.025% by Mass>

Al is a component capable of forming an oxide. In order to set the Al content in the weld metal to 0.010% by mass or less as described below, it is necessary to limit the Al content in the wire to 0.025% by mass or less.

<V: 0.33% to 0.43% by Mass>

V, which is one of the basic components of high-strength 2.25Cr-1Mo-V steel as well as Cr and Mo, is added to the welding wire in order to increase room-temperature strength and creep rupture strength. In order to set the V content in the weld metal to 0.30% to 0.40% by mass as described below, it is necessary to limit the V content in the wire to 0.33% to 0.43% by mass.

<Nb: 0.015% to 0.030% by Mass>

Nb is a component that is added to the welding wire in order to increase high-temperature strength and creep strength. In order to set the Nb content in the weld metal to 0.012% to 0.022% by mass as described below, it is necessary to limit the Nb content in the wire to 0.015% to 0.030% by mass.

<W: ≤ 0.05% by Mass>

W is a component that may reduce creep strength. In order to set the W content in the weld metal to 0.05% by mass or less as described below, it is necessary to limit the W content in the wire to 0.05% by mass or less.

<B: ≤ 0.0005% by Mass>

B is a component that may significantly deteriorate SR cracking resistance even when added at a level of a few ppm. In order to set the B content in the weld metal to 0.0005% by mass or less as described below (more preferably, 0.0003% by mass or less), it is necessary to limit the B content in the wire to 0.0005% by mass or less (more preferably, 0.0003% by mass or less).

<Balance: Fe and Inevitable Impurities>

The balance of the composition of the welding wire includes Fe and inevitable impurities. Examples of the inevitable impurities include Sn, Sb, As, Pb, and Bi, as described above. The contents of Sn, Sb, and As in the wire are each preferably limited to 0.005% by mass or less. The contents of Pb and Bi in the wire are each preferably limited to 0.0001% by mass or less. It is preferable to limit Sn + Sb + As + 10Pb + 10Bi to 0.015% by mass or less.

«Sintered Flux»

The welding wire according to the present invention may be used in combination with a sintered flux having a specific MgO content, a specific $Al_2O_3$ content, a specific $SiO_2$ content, a specific metal fluoride content in terms of F, a specific metal carbonate content in terms of $CO_2$, a specific C content, a specific content of "Si + Mn", a specific content of "Ni + Co + Cr + Mo + Ti + Al + V + Nb + W", and a specific "total content of B and boron oxide in terms of B".

Note that C, Si, Mn, Ni, Co, Cr, Mo, Ti, Al, V, Nb, W, and B refer to metals. Specifically, for example, Si refers to metal Si, and the term "metal Si" refers to one or more substance selected from "pure-metal Si" and "alloyed Si". The same applies to the other elements.

The reasons for limiting components of the sintered flux are described below.

<MgO: 25% to 40% by Mass>

MgO, which has a high melting point, promotes solidification of slag and enables a good bead shape to be achieved. MgO also enables the oxygen content to be controlled. If the MgO content is less than 25% by mass, a deoxidation effect that occurs during welding may become small, which increases the oxide content in the weld metal and consequently reduces toughness. On the other hand, a MgO content exceeding 40% by mass, which deteriorates the bead shape, may deteriorate slag detachability. Thus, the MgO content is limited to 25% to 40% by mass.

<$Al_2O_3$: 13% to 30% by Mass>

$Al_2O_3$ increases fluidity of slag and enables the oxygen content to be controlled.

If the $Al_2O_3$ content is less than 13% by mass, the wettability of the weld bead to a base metal may be degraded, which increases the risk of slag inclusion. On the other hand, an $Al_2O_3$ content exceeding 30% by mass, which increases the oxygen content in the weld metal, may increase the oxide content in the weld metal and consequently reduce toughness. Thus, the $Al_2O_3$ content is limited to 13% to 30% by mass.

<$SiO_2$: 3% to 15% by Mass>

$SiO_2$ enhances fluidity. A $SiO_2$ content of less than 3% by mass may deteriorate the wettability of the weld bead to a base metal, which increases the risk of slag inclusion. On the other hand, a $SiO_2$ content exceeding 15% by mass, which increases the oxygen content in the weld metal, may increase the oxide content in the weld metal and consequently reduce toughness. Thus, the $SiO_2$ content is limited to 3% to 15% by mass.

<Metal Fluoride in Terms of F: 3% to 15% by Mass>

A metal fluoride enables the oxygen content in the weld metal to be controlled. If the content of the metal fluoride in terms of F is less than 3% by mass, the oxygen content in the weld metal becomes large and consequently the oxide content becomes large during welding, which may reduce toughness. On the other hand, if the content of a metal fluoride in terms of F exceeds 15% by mass, the bead shape may be degraded due to an unstable welding arc, which deteriorates slag detachability. Thus, the content of a metal fluoride in terms of F is limited to 3% to 15% by mass.

<Metal Carbonate in Terms of $CO_2$: 3% to 15% by Mass>

$CO_2$ included in a metal carbonate enables the content of diffusible hydrogen in a weld metal to be controlled. If the content of a metal carbonate in terms of $CO_2$ is less than 3% by mass, the content of diffusible hydrogen in a weld metal may become large. On the other hand, if the content of a metal carbonate in terms of $CO_2$ exceeds 15% by mass, the oxygen content in the weld metal becomes large and consequently the oxide content in a weld metal becomes large, which may reduce toughness. Thus, the content of a metal carbonate in terms of $CO_2$ is limited to 3% to 15% by mass.

<C: $\leq$ 0.10% by Mass>
<Si + Mn: $\leq$ 3.0% by Mass>
<Ni + Co + Cr + Mo + Ti + Al + V + Nb + W: < 1.0% by Mass>

<Total of B and Boron Oxide in Terms of B: < 0.10% by Mass>

In the present invention, components specified as those of the welding wire according to the present invention are not aggressively added from the flux. This is because, if the alloy elements are added from the flux, the yield rates of the alloy components may greatly vary depending on the welding conditions, which increases the risk of the chemical composition of the weld metal deviating from the designed composition range. Thus, the contents of C, Si, Mn, Ni, Co, Cr, Mo, Ti, Al, V, Nb, W, and B in the flux are limited as described above.

«Weld Metal»

A weld metal according to the present invention is prepared using the above-described welding wire in combination with the above-described sintered flux.

The weld metal contains C, Si, Mn, P, S, Ni, Co, Cr, Mo, Ti, Al, V, Nb, W, B, and O in predetermined amounts with the balance being Fe and inevitable impurities.

The reasons for limiting the components are described below.

<C: 0.09% to 0.14% by Mass>

C is a component that is added to the weld metal in order to increase the toughness, the room-temperature strength, and the creep rupture strength of the weld metal. C has the following two main functions:

(1) C, which lowers the bainite transformation temperature, enables a fine microstructure to be formed and thereby increases toughness.

(2) C, which is capable of forming a carbide of Cr, Mo, V, Nb, or the like, markedly increases creep rupture strength only when C reacts with any of these elements to form a "fine carbide".

If the C content is less than 0.09% by mass, the bainite transformation temperature becomes high, which may result in coarsening of the bainite microstructure and consequently reduce toughness. In addition, the amount of the precipitated carbide may become small, which reduces creep rupture strength. Furthermore, a temper embrittlement property may be degraded. On the other hand, if the C content exceeds 0.14% by mass, the size of the precipitated carbide becomes large, which may reduce toughness. Thus, the C content is limited to 0.09% to 0.14% by mass.

Mn, which is an element that lowers the bainite transformation temperature the most after C, is closely related to the optimal C content required for achieving both high toughness and high creep rupture strength because "Mn, which lowers the bainite transformation point, enables a fine microstructure to be formed and thereby increases toughness" and "addition of Mn reduces creep strength".

Specifically, if the Mn content is less than 1.00% by mass, the bainite transformation temperature may fail to be lowered to a sufficient degree even when the C content is set to 0.09% to 0.14% by mass, which results in failure to forming a fine microstructure and consequently reduces toughness. On the other hand, if the Mn content in the weld metal exceeds 1.30% by mass, creep rupture strength may be rapidly reduced due to the impact of Mn even when the C content is set to 0.09% to 0.14% by mass. The Mn content is more preferably limited to 1.05% to 1.28% by mass.

Cr, which is the most abundant carbide-forming element in the 2.25Cr-1Mo-V weld metal, is closely related to the optimal C content required for achieving both high toughness and high creep rupture strength because "Cr markedly increases creep rupture strength only when Cr forms a 'fine carbide'". It was found in the studies conducted by the inventors of the present invention that, in the 2.25Cr-1Mo-V steel weld metal, "a reduction in the Cr content may promote precipitation of a fine carbide while an increase in the Cr content may promote precipitation of a coarse carbide".

Specifically, if the Cr content is less than 2.00% by mass, the amount of the precipitated fine carbide becomes excessively large even when the C content is set to 0.09% to 0.14% by mass, which may result in excessive hardening and consequently reduce toughness. On the other hand, if the Cr content exceeds 2.30% by mass, the size of the precipitated carbide may become large even when the C content is set to 0.09% to 0.14% by mass, which makes it impossible to increase creep rupture strength to a sufficient degree. The Cr content is more preferably limited to 2.00% to 2.24% by mass.

Thus, the markedly advantageous effect of "achieving both high toughness and high creep rupture strength" may occur at a C content of 0.09% to 0.14% by mass only when the Mn content in the weld metal is 1.00% to 1.30% by mass (more preferably, the lower limit is 1.05% by mass and the upper limit is 1.28% by mass) and the Cr content in the weld metal is 2.00% to 2.30% by mass (more preferably, the lower limit is 2.05% by mass and the upper limit is 2.24% by mass).

<Si: 0.05% to 0.35% by Mass>

Si is a component that is added to the weld metal in order to increase the room-temperature strength of the weld metal and cause deoxidation of the weld metal to occur. If the Si content is less than 0.05% by mass, the strength of the weld metal may become low. Furthermore, the oxygen content in the weld metal may become large, which increases the oxide content during welding and consequently reduces toughness. On the other hand, if the Si content exceeds 0.35% by mass, temper embrittlement property may be degraded.

Due to the above reasons, the Si content in a weld metal is limited to 0.05% to 0.35% by mass in "ASME Sec. VIII Div. 2 3.4. Supplemenal Requirement for Cr-Mo Steels Table 3.2". It is impossible to use a weld metal having a Si content that does not fall within the range because such a weld metal would not have the predetermined properties. Thus, the Si content is limited to 0.05% to 0.35% by mass.

<Mn: 1.00% to 1.30% by Mass>

Mn, which increases room-temperature strength, causes deoxidation of the weld metal similarly to Si. Mn also plays an important role in increasing toughness because Mn "lowers the bainite transformation temperature and thereby enables a fine microstructure to be formed" as described above. Mn is also one of the elements that may reduce creep rupture strength and deteriorate temper embrittlement property as well as Ni and Co. If the Mn content is less than 1.00% by mass, coarsening of a microstructure may occur due to the increased bainite transformation temperature, which reduces toughness. On the other hand, if the Mn content exceeds 1.30% by mass, creep rupture strength may be degraded, which in turn deteriorates temper embrittlement property. Thus, the Mn content is limited to 1.00% to 1.30% by mass. The lower and upper limits for the preferable range of the Mn content are 1.05% by mass and 1.28% by mass, respectively.

C, which is an element that contributes to a reduction in the bainite transformation temperature more than Mn, is closely related to the optimal Mn content required for achieving both high toughness and high creep rupture strength because "C, which lowers the bainite transformation point, enables a fine microstructure to be formed and thereby increases toughness" and "C markedly increases creep strength only when C is precipitated as a fine carbide together with an alloy element".

Specifically, if the C content is less than 0.09% by mass, coarsening of a bainite microstructure may occur due to the increased bainite transformation temperature, which reduces toughness, even when the Mn content is set to 1.00% to 1.30% by mass (more preferably, the lower limit is 1.05% by mass and the upper limit is 1.28% by mass). Furthermore, the amount of the precipitated carbide may become small, which reduces creep rupture strength. Moreover, temper embrittlement property may be degraded. On the other hand, if the C content exceeds 0.14% by mass, the size of the precipitated carbide may become large even when the Mn content is set to 1.00% to 1.30% by mass (more preferably, the lower limit is 1.05% by mass and the upper limit is 1.28% by mass), which reduces toughness.

Cr, which is the most abundant carbide-forming element in the 2.25Cr-1Mo-V weld metal, is closely related to the optimal Mn content required for achieving both high toughness and high creep rupture strength because "Cr increases creep rupture strength only when Cr forms a 'fine carbide'". As described above, it was found in the studies conducted by the inventors of the present invention that "a reduction in the Cr content may promote precipitation of a fine carbide while an increase in the Cr content may promote precipitation of a coarse carbide".

Specifically, if the Cr content is less than 2.00% by mass, the amount of the precipitated fine carbide becomes excessively large even when the Mn content is set to 1.00% to 1.30% by mass (more preferably, the lower limit is 1.05% by mass and the upper limit is 1.28% by mass), which may result in excessive hardening and consequently reduce toughness. On the other hand, if the Cr content exceeds 2.30% by mass, the size of the carbide may become large even when the Mn content is set to 1.00% to 1.30% by mass (more preferably, the lower limit is 1.05% by mass and the upper limit is 1.28% by mass), which makes it impossible to increase creep rupture strength to a sufficient degree. The Cr content is more preferably limited to 2.00% to 2.24% by mass.

Thus, the markedly advantageous effect of "achieving both high toughness and high creep rupture strength" may occur at a Mn content of 1.00% to 1.30% by mass (more preferably, the lower limit is 1.05% by mass and the upper limit is 1.28% by mass) only when the C content in the weld metal is 0.09% to 0.14% by mass and the Cr content in the weld metal is 2.00% to 2.30% by mass (more preferably, the lower limit is 2.05% by mass and the upper limit is 2.24% by mass).

<P: ≤ 0.015% by Mass and S: ≤ 0.015% by Mass>

P and S, which segregate at grain boundaries, are components that deteriorate temper embrittlement property and SR cracking sensitivity. If the P content exceeds 0.015% by mass or the S content exceeds 0.015% by mass, intergranular embrittlement may occur, which deteriorates temper embrittlement property and SR cracking sensitivity. Due to the above reason, the P and S contents in a weld metal are limited to 0.015% by mass in "ASME Sec. VIII Div. 2 3.4. Supplemenal Requirement for Cr-Mo Steels Table 3.2". It is impossible to use a weld metal having a P or S content that does not fall within the range because such a weld metal would not have the predetermined properties. Thus, the P content is limited to 0.015% by mass or less and the S content is limited to 0.015% by mass or less.

Needless to say, reducing the content of impurities other than P or S, that is, Sn, Sb, As, Pb, and Bi, also enhances temper embrittlement property and SR cracking sensitivity in an effective manner. Thus, the contents of Sn, Sb, and As in the weld metal are each preferably limited to 0.005% by mass or less. The contents of Pb and Bi in the weld metal are each preferably limited to less than 0.0001% by mass.

<Ni: ≤ 0.06% by Mass and Co: ≤ 0.06% by Mass>

Ni and Co, which are austenite-forming elements, are components that reduce creep rupture strength similarly to Mn. If the Ni content exceeds 0.06% by mass or the Co content exceeds 0.06% by mass, creep rupture strength may become low. Thus, the Ni content is limited to 0.06% by mass or less and the Co content is limited to 0.06% by mass or less.

<Cr: 2.00% to 2.30% by Mass>

Cr, which is one of the basic components of high-strength 2.25Cr-1Mo-V steel as well as Mo and V, is added to the weld metal in order to enhance corrosion resistance and increase room-temperature strength and creep rupture strength. It was found in the studies conducted by the inventors of the present invention that Cr is capable of forming a carbide and also affects the shape of fine carbide precipitates including V or Nb which is described below. Thus, it was found that a reduction in the Cr content promotes precipitation of a fine carbide and enables the precipitated carbide to be maintained at a high temperature for a prolonged period of time.

If the Cr content is less than 2.00% by mass, the amount of the precipitated fine carbide becomes excessively large, which may result in excessive hardening and consequently reduce toughness. On the other hand, if the Cr content exceeds 2.30% by mass, coarsening of the carbide may proceed while holding is performed at a high temperature, which makes it impossible to increase creep rupture strength to a sufficient degree. Thus, the Cr content is limited to 2.00% to 2.30% by mass. The lower and upper limits for the preferable range of the Cr content are 2.05% by mass and 2.24% by mass, respectively.

C is closely related to the optimal Cr content required for achieving both high toughness and high creep rupture strength because "C markedly increases creep strength only when C is precipitated as a fine carbide".

Specifically, if the C content is less than 0.09% by mass, the bainite transformation temperature may be high even when the Cr content is set to 2.00% to 2.30% by mass (more preferably, the lower limit is 2.05% by mass and the upper limit is 2.24% by mass), which causes coarsening of the bainite microstructure to occur and consequently reduces toughness. In addition, the amount of the precipitated fine carbide may become small, which reduces creep rupture strength. Furthermore, temper embrittlement property may be degraded. On the other hand, if the C content exceeds 0.14% by mass, the size of the precipitated carbide may become large even when the Cr content is set to 2.00% to 2.30% by mass (more preferably, the lower limit is 2.05% by mass and the upper limit is 2.24% by mass), which reduces toughness.

Mn is closely related to the optimal Cr content required for achieving both high toughness and high creep rupture strength because "Mn, which lowers the bainite transformation point, enables a fine microstructure to be formed and thereby increases toughness" and "addition of Mn reduces creep strength".

Specifically, if the Mn content in the weld metal is less than 1.00% by mass, the bainite transformation temperature may fail to be lowered to a sufficient degree even when the Cr content is set to 2.00% to 2.30% by mass (more preferably, the lower limit is 2.05% by mass and the upper limit is 2.24% by mass), which results in failure to form a fine microstructure and consequently reduces toughness. On the other hand, if the Mn content in the weld metal exceeds 1.30% by mass, creep rupture strength may be rapidly reduced due to the impact of Mn even when the Cr content is set to 2.00% to 2.30% by mass (more preferably, the lower limit is 2.05% by mass and the upper limit is 2.24% by mass). The Mn content is more preferably limited to 1.05 to 1.28% by mass.

Thus, the markedly advantageous effect of "achieving both high toughness and high creep rupture strength" may occur at a Cr content of 2.00% to 2.30% by mass (more preferably, the lower limit is 2.05% by mass and the upper limit is 2.24% by mass) only when the C content in the weld metal is 0.09% to 0.14% by mass and the Mn content in the weld metal is 1.00% to 1.30% by mass (more preferably, the lower limit is 1.05% by mass and the upper limit is 1.28% by mass)".

<Mo: 0.90% to 1.20% by Mass>

Mo, which is one of the basic components of high-strength 2.25Cr-1Mo-V steel as well as Cr and V, is capable of forming a carbide and thereby contributes to increases in room-temperature strength and creep rupture strength. If the Mo content is less than 0.90% by mass, the amount of the precipitated carbide may become small, which reduces room-temperature strength and creep strength. On the other hand, if the Mo content exceeds 1.20% by mass, the amount of a fine carbide may become large, which excessively increases hardness and consequently reduces toughness. Due to the above reason, the Mo content in a weld metal is limited to 0.90% to 1.20% by mass in "ASME Sec. VIII Div. 2 3.4. Supplemenal Requirement for Cr-Mo Steels Table 3.2". It is impossible to use a weld metal having a Mo content that does not fall within the range because such a weld metal would not have the predetermined properties. Thus, the Mo content is limited to 0.90% to 1.20% by mass.

<Ti: ≤ 0.010% by Mass>

Ti is capable of forming a fine carbonitride. If the Ti content exceeds 0.010% by mass, the amount of fine carbide becomes large, which may enhance hardness excessively and consequently reduce toughness. Furthermore, temper embrittlement property may be degraded. Thus, the Ti content is limited to 0.010% by mass or less.

<Al: ≤ 0.010% by Mass>

Al is capable of forming an oxide in the weld metal. If the Al content exceeds 0.010% by mass, the amount of coarse grains becomes large, which may reduce toughness. Thus, the Al content is limited to 0.010% by mass or less.

<V: 0.30% to 0.40% by Mass>

V, which is one of the basic components of high-strength 2.25Cr-1Mo-V steel as well as Cr arid Mo, is capable of forming a carbide and thereby contributes to increases in room-temperature strength and creep rupture strength. If the V content is less than 0.30% by mass, the amount of the precipitated carbide may become small, which results in an insufficient creep rupture strength. On the other hand, if the V content exceeds 0.40% by mass, the amount of fine carbide becomes large, which may enhance hardness excessively and consequently reduce toughness and SR cracking sensitivity. Due to the above reason, the upper limit for the V content in the weld metal is limited to 0.40% by mass in "ASME Sec. VIII Div. 2 3.4. Supplemenal Requirement for Cr-Mo Steels Table 3.2". It is impossible to use a weld metal having a V content that does not fall within the range because such a weld metal would not have the predetermined properties. Thus, the V content is limited to 0.30% to 0.40% by mass.

<Nb: 0.012% to 0.022% by Mass>

Nb, which is highly likely to form a fine carbide, is a component that is added to the weld metal in order to increase, in particular, creep rupture strength. If the Nb content is less than 0.012% by mass, the amount of the precipitated carbide may become small, which results in an insufficient creep rupture strength. On the other hand, if the Nb content exceeds 0.022% by mass, the amount of fine carbide becomes large, which may enhance hardness excessively and consequently reduce toughness and SR cracking sensitivity. Thus, the Nb content is limited to 0.012% to 0.022% by mass.

<W: ≤ 0.05% by Mass>

W is a component that reduces creep strength. If the W content exceeds 0.05% by mass, the amount of the precipitated carbide becomes large, which may reduce creep rupture strength. Thus, the W content is limited to 0.05% by mass or less.

<B: ≤ 0.0005% by Mass>

B is a component that may significantly deteriorate SR cracking resistance even when added at a level of a few ppm. If the B content exceeds 0.0005% by mass, SR cracking resistance may significantly degraded. Thus, the B content is limited to 0.0005% by mass or less and is preferably 0.0003% by mass or less.

<O: ≤ 0.045% by Mass>

Oxygen is present in the weld metal as an oxide. If the O content exceeds 0.045% by mass, the oxide content in the weld metal becomes large, which may reduce toughness. While the oxygen content in a weld metal is controlled within 0.035% to 0.065% by mass in order to increase SR cracking resistance in the prior art Japanese Unexamined Patent Application Publication No. 8-150478, such a limitation is not necessary in the present invention, in which the B content in the weld metal is reduced in order to increase SR cracking resistance. Thus, the O content is limited to 0.045% by mass or less.

<Balance: Fe and Inevitable Impurities>

The balance of the composition of the weld metal is Fe and inevitable impurities. As described above, examples of the inevitable impurities include Sn, Sb, As, Pb, and Bi. The contents of Sn, Sb, and As in the wire are each preferably limited to 0.005% by mass or less. The contents of Pb and Bi are each preferably limited to less than 0.0001% by mass. It is preferable to limit Sn + Sb + As + 10Pb + 10Bi to 0.015% by mass or less.
The amount of heat input during welding may affect the ratio between the coarse-grained zone (as-casted zone) and the fine-grained zone (reheated zone) in the weld metal. The amount of heat input during welding is preferably set to 18 to 42 kJ/cm. This is because, if the amount of heat input is less than 18 kJ/cm, the proportion of the fine-grained zone (reheated zone) in the entire weld metal becomes large, which increases toughness but may reduce creep strength. On the other hand, if the amount of heat input exceeds 42 kJ/cm, the proportion of the coarse-grained zone (as-casted zone) in the entire weld metal becomes large, which increases creep rupture strength but may reduce toughness.

EXAMPLE

The advantageous effects of the present invention are described below with a comparison between Examples, which fall within the range of the present invention, and Comparative Examples, which do not fall within the range of the present invention.

[Chemical Composition of Welding Wire]

Tables 1 and 2 summarize the chemical compositions of the welding wires used in Examples of the present invention. Table 3 summarizes the chemical compositions of the fluxes used. Values that do not fall within the range of the present invention are underlined.

[Table 1]

| Class | Wire code | Chemical composition of wire (mass%) | | | | | | | | | |
|---|---|---|---|---|---|---|---|---|---|---|---|
| | | C | Si | Mn | P | S | Ni | Co | Cr | Mo | Ti |
| Example | W1 | 0.12 | 0.20 | 1.17 | 0.004 | 0.001 | 0.04 | < 0.01 | 2.14 | 1.00 | < 0.002 |
| | W2 | 0.15 | 0.18 | 1.29 | 0.005 | 0.002 | 0.02 | < 0.01 | 2.15 | 1.02 | < 0.002 |
| | W3 | 0.17 | 0.19 | 1.33 | 0.005 | 0.001 | 0.03 | < 0.01 | 2.15 | 1.00 | < 0.002 |
| | W4 | 0.14 | 0.25 | 1.06 | 0.004 | 0.001 | 0.02 | < 0.01 | 2.13 | 0.99 | < 0.002 |
| | W5 | 0.16 | 0.20 | 1.16 | 0.004 | 0.001 | 0.03 | < 0.01 | 2.12 | 1.05 | < 0.002 |
| | W6 | 0.14 | 0.18 | 1.38 | 0.003 | 0.001 | 0.01 | < 0.01 | 2.07 | 1.03 | < 0.002 |
| | W7 | 0.16 | 0.30 | 1.25 | 0.002 | 0.003 | 0.03 | < 0.01 | 2.03 | 1.10 | < 0.002 |
| | W8 | 0.13 | 0.32 | 1.20 | 0.002 | 0.002 | 0.04 | < 0.01 | 2.21 | 1.04 | < 0.002 |
| | W9 | 0.17 | 0.18 | 1.22 | 0.003 | 0.004 | 0.03 | < 0.01 | 2.29 | 1.00 | < 0.002 |
| | W10 | 0.15 | 0.21 | 1.23 | 0.002 | 0.001 | 0.01 | < 0.01 | 2.15 | 1.09 | < 0.002 |
| | W11 | 0.12 | 0.25 | 1.15 | 0.005 | 0.002 | < 0.01 | < 0.01 | 2.22 | 1.05 | < 0.002 |
| | W12 | 0.14 | 0.22 | 1.20 | 0.003 | 0.002 | 0.02 | < 0.01 | 2.09 | 0.94 | < 0.002 |
| | W13 | 0.12 | 0.27 | 1.30 | 0.004 | 0.002 | 0.02 | < 0.01 | 2.23 | 0.99 | < 0.002 |
| | W14 | 0.15 | 0.20 | 1.29 | 0.004 | 0.001 | 0.02 | < 0.01 | 2.14 | 1.00 | < 0.002 |
| Comparative example | W15 | <u>0.09</u> | 0.15 | 1.15 | 0.005 | 0.001 | 0.02 | < 0.01 | 2.13 | 0.99 | < 0.002 |
| | W16 | <u>0.20</u> | 0.22 | 1.31 | 0.003 | 0.001 | 0.03 | < 0.01 | 2.15 | 1.04 | < 0.002 |
| | W17 | 0.15 | 0.22 | <u>0.96</u> | 0.004 | 0.001 | 0.01 | < 0.01 | 2.20 | 1.01 | < 0.002 |
| | W18 | 0.15 | 0.17 | <u>1.45</u> | 0.003 | 0.001 | 0.04 | < 0.01 | 2.19 | 1.01 | < 0.002 |
| | W19 | 0.16 | 0.19 | 1.29 | 0.005 | 0.001 | <u>0.09</u> | < 0.01 | 2.09 | 1.00 | < 0.002 |
| | W20 | 0.15 | 0.22 | 1.24 | 0.006 | 0.002 | 0.01 | <u>0.10</u> | 2.12 | 0.99 | < 0.002 |
| | W21 | 0.13 | 0.25 | 1.16 | 0.003 | 0.003 | 0.01 | < 0.01 | <u>1.94</u> | 0.97 | < 0.002 |
| | W22 | 0.12 | 0.15 | 1.30 | 0.003 | 0.004 | 0.02 | < 0.01 | <u>2.40</u> | 0.98 | < 0.002 |
| | W23 | 0.13 | 0.20 | 1.35 | 0.004 | 0.003 | 0.02 | < 0.01 | <u>2.73</u> | 1.01 | < 0.002 |
| | W24 | 0.16 | 0.19 | 1.34 | 0.005 | 0.001 | 0.02 | < 0.01 | 2.12 | 1.02 | <u>0.033</u> |
| | W25 | 0.13 | 0.25 | 1.37 | 0.004 | 0.003 | < 0.01 | < 0.01 | 2.23 | 0.97 | 0.003 |
| | W26 | 0.17 | 0.20 | 1.25 | 0.003 | 0.002 | 0.02 | < 0.01 | 2.14 | 1.10 | < 0.002 |
| | W27 | 0.15 | 0.22 | 1.16 | 0.003 | 0.001 | < 0.01 | < 0.01 | 2.15 | 1.05 | < 0.002 |
| | W28 | 0.15 | 0.20 | 1.22 | 0.003 | 0.001 | 0.01 | < 0.01 | 2.20 | 1.00 | < 0.002 |
| | W29 | 0.15 | 0.22 | 1.17 | 0.005 | 0.001 | < 0.01 | < 0.01 | 2.10 | 0.99 | < 0.002 |
| | W30 | 0.18 | 0.22 | 1.30 | 0.005 | 0.002 | 0.03 | < 0.01 | 2.13 | 1.03 | < 0.002 |
| | W31 | 0.12 | 0.19 | 1.26 | 0.005 | 0.002 | < 0.01 | < 0.01 | 2.16 | 1.02 | < 0.002 |

[Table 2]

| Class | Wire code | Chemical composition of wire (mass%) | | | | | | | | |
|---|---|---|---|---|---|---|---|---|---|---|
| | | Al | V | Nb | W | Sb | Sn | As | B | O |
| Example | W1 | 0.003 | 0.41 | 0.026 | < 0.01 | 0.003 | 0.002 | 0.003 | 0.0003 | ≤ 0.010 |
| | W2 | 0.007 | 0.38 | 0.020 | < 0.01 | 0.003 | 0.002 | 0.005 | < 0.0001 | ≤ 0.010 |
| | W3 | 0.003 | 0.37 | 0.020 | < 0.01 | 0.003 | 0.002 | 0.003 | 0.0002 | ≤ 0.010 |
| | W4 | 0.003 | 0.39 | 0.018 | < 0.01 | 0.003 | 0.002 | 0.003 | 0.0002 | ≤ 0.010 |
| | W5 | 0.003 | 0.35 | 0.021 | < 0.01 | < 0.002 | 0.002 | 0.003 | 0.0002 | ≤ 0.010 |
| | W6 | 0.002 | 0.39 | 0.027 | < 0.01 | 0.002 | 0.002 | < 0.002 | 0.0001 | ≤ 0.010 |
| | W7 | 0.002 | 0.37 | 0.022 | < 0.01 | 0.004 | < 0.002 | 0.002 | 0.0001 | ≤ 0.010 |
| | W8 | 0.005 | 0.35 | 0.024 | < 0.01 | < 0.002 | 0.004 | 0.002 | 0.0003 | ≤ 0.010 |
| | W9 | 0.006 | 0.36 | 0.022 | < 0.01 | < 0.002 | 0.003 | 0.003 | 0.0001 | ≤ 0.010 |
| | W10 | 0.006 | 0.34 | 0.025 | < 0.01 | 0.003 | < 0.002 | < 0.002 | 0.0003 | ≤ 0.010 |
| | W11 | 0.002 | 0.42 | 0.021 | < 0.01 | 0.005 | 0.004 | 0.002 | 0:0001 | ≤ 0.010 |
| | W12 | 0.006 | 0.39 | 0.017 | < 0.01 | < 0.002 | < 0.002 | < 0.002 | 0.0002 | ≤ 0.010 |
| | W13 | 0.003 | 0.36 | 0.028 | < 0.01 | < 0.002 | < 0.002 | < 0.002 | 0.0001 | ≤ 0.010 |
| | W14 | 0.005 | 0.36 | 0.020 | < 0.01 | < 0.002 | < 0.002 | < 0.002 | 0.0004 | ≤ 0.010 |
| Comparative example | W15 | 0.005 | 0.40 | 0.028 | < 0.01 | 0.002 | 0.002 | 0.003 | 0.0001 | ≤ 0.010 |
| | W16 | 0.004 | 0.36 | 0.021 | < 0.01 | 0.003 | 0.002 | < 0.002 | 0.0002 | ≤ 0.010 |
| | W17 | 0.003 | 0.40 | 0.017 | < 0.01 | 0.002 | 0.002 | 0.002 | 0.0002 | ≤ 0.010 |
| | W18 | 0.003 | 0.40 | 0.022 | < 0.01 | 0.002 | < 0.002 | 0.002 | 0.0003 | ≤ 0.010 |
| | W19 | 0.004 | 0.37 | 0.021 | < 0.01 | 0.002 | 0.002 | < 0.002 | 0.0002 | ≤ 0.010 |
| | W20 | 0.005 | 0.40 | 0.020 | < 0.01 | 0.002 | 0.002 | 0.002 | 0.0002 | ≤ 0.010 |
| | W21 | 0.002 | 0.39 | 0.018 | < 0.01 | 0.004 | 0.003 | 0.002 | 0.0001 | ≤ 0.010 |
| | W22 | 0.003 | 0.34 | 0.019 | < 0.01 | < 0.002 | 0.004 | 0.002 | 0.0001 | ≤ 0.010 |
| | W23 | 0.003 | 0.33 | 0.023 | < 0.01 | < 0.002 | 0.003 | 0.002 | 0.0001 | ≤ 0.010 |
| | W24 | 0.008 | 0.37 | 0.020 | < 0.01 | 0.003 | 0.002 | 0.004 | 0.0002 | ≤ 0.010 |
| | W25 | <u>0.030</u> | 0.36 | 0.029 | < 0.01 | 0.002 | 0.002 | 0.003 | 0.0003 | ≤ 0.010 |
| | W26 | 0.003 | <u>0.31</u> | 0.018 | < 0.01 | 0.002 | < 0.002 | < 0.002 | 0.0001 | ≤ 0.010 |
| | W27 | 0.006 | <u>0.46</u> | 0.026 | < 0.01 | 0.003 | 0.003 | 0.003 | 0.0001 | ≤ 0.010 |
| | W28 | 0.004 | 0.40 | <u>0.014</u> | < 0.01 | 0.002 | 0.003 | < 0.002 | 0.0002 | ≤ 0.010 |
| | W29 | 0.004 | 0.35 | <u>0.033</u> | < 0.01 | < 0.002 | < 0.002 | < 0.002 | 0.0001 | ≤ 0.010 |
| | W30 | 0.003 | 0.37 | 0.025 | <u>0.07</u> | < 0.002 | < 0.002 | < 0.002 | 0.0002 | ≤ 0.010 |
| | W31 | 0.005 | 0.41 | 0.021 | < 0.01 | < 0.002 | < 0.002 | < 0.002 | <u>0.0007</u> | ≤ 0.010 |

[Table 3]

| Class | Flux code | Chemical composition of flux (mass%) | | | | | | | | |
|---|---|---|---|---|---|---|---|---|---|---|
| | | MgO | $Al_2O_3$ | $SiO_2$ | Metal fluoride (in terms of F) | Metal carbonate (in terms of $CO_2$) | C | Si+Mn | B + B oxide | Ni+Co+Cr+Mo+Ti+Al+V+Nb+W<1.0 |
| Example | F1 | 27 | 26 | 12 | 5 | 11 | 0.06 | 0.5 | < 0.10 | < 1.0 |
| | F2 | 36 | 16 | 7 | 10 | 6 | < 0.01 | 1.1 | < 0.10 | < 1.0 |
| Comparative example | F3 | <u>44</u> | 18 | 1 | 9 | 10 | <u>0.17</u> | 0.8 | < 0.10 | < 1.0 |
| | F4 | 39 | <u>35</u> | 12 | <u>1</u> | <u>17</u> | 0.03 | 1.0 | < 0.10 | < 1.0 |
| | F5 | <u>20</u> | 20 | <u>25</u> | 11 | 7 | 0.01 | <u>3.3</u> | <u>0.22</u> | < 1.0 |
| | F6 | 27 | <u>10</u> | 6 | <u>18</u> | <u>2</u> | 0.02 | 1.1 | < 0.10 | <u>Cr=0.49. Ni=0.68</u> |

[Welding Conditions]

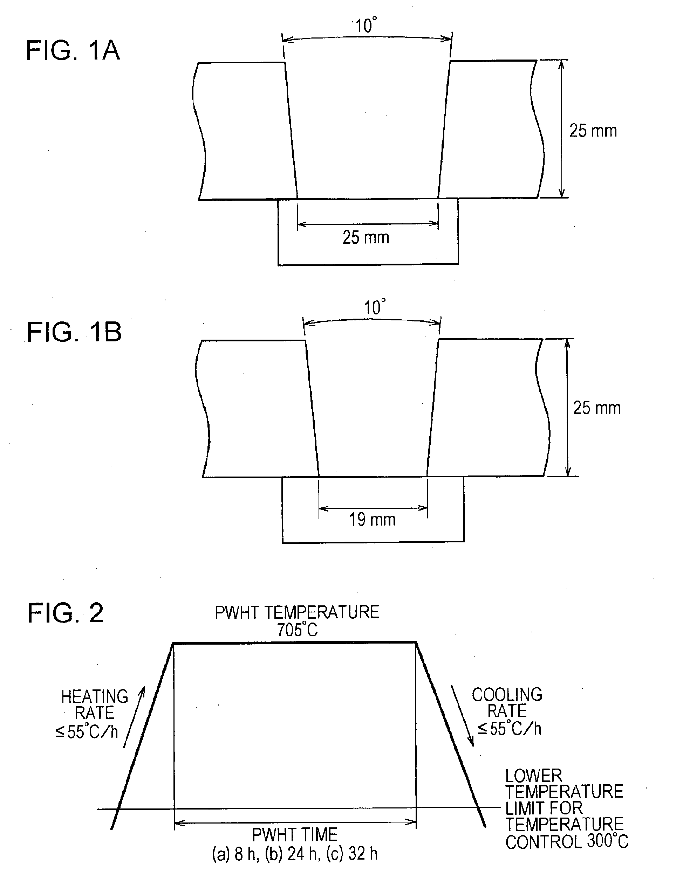

Figs. 1A and 1B illustrate the shape of a groove formed in a weld-testing specimen used in Examples of the present invention. As a test plate, 2.25Cr-1Mo-V steel such as ASTM A542 Type D steel and carbon steel such as JIS G3106 SM490A steel having a groove on which about two or three layers were built up by buttering welding using the test material may be used. Since the test results were the same regardless of the test plate used, ASTM A542 Type D steel, which has a similar composition, was used in Examples of the present invention. Two-pass-per-layer separate welding was performed with a weld length of 700 to 1000 mm. The number of the built-up layers was set to 6 to 8.

Table 4 summarizes the conditions under which welding was performed in weld testing. The polarity of a power source used for welding using a submerged arc welding wire is generally AC or DCEP. However, in the present invention, the properties of the deposited metal determined in the weld testing were the same regardless of the polarity of the power source used. Thus, only the test results obtained using an AC power source were described in Examples below. Weld testing was performed in a downward position.

[Table 4]

| Welding conditions | Polarity | Electrode | Welding current A | Arc voltage V | Welding speed cpm | Welding heat input kJ/cm | Preheat temperature °C | Interpass temperature °C | Groove shape | Weld base metal/metal backing |
|---|---|---|---|---|---|---|---|---|---|---|
| C1 | AC | Leading | 540 | 30 | 60 | 34 | 200°C | 200-250°C | Fig. 1A | ASTMA542 Type D |
| | AC | Trailing | 550 | 32 | | | | | | |
| C2 | AC | - | 520 | 30 | 40 | 23 | 200°C | 200-250°C | Fig. 1B | ASTM A542 Type D |

[Welding Workability]

A sensory evaluation of welding workability during weld testing conducted under the welding conditions shown in Table 4 was made. Firstly, "Slag detachability" was evaluated in the following manner: an evaluation of "Good" was given when slag detachability was high; and an evaluation of "Poor" was given when slag detachability was low. Secondly, "Bead wettability" was evaluated in the following manner: an evaluation of "No" was given when the occurrence of slag inclusion at the end of bead was low; and an evaluation of "Yes" was given when the occurrence of the slag inclusion was high.

Table 5 summarizes the results.

[Table 5]

| Class | No. | Weld metal code | Wire code | Flux code | Welding workability evaluation | | |
|---|---|---|---|---|---|---|---|
| | | | | | Welding conditions | Slag detachability | Bead wettability (Slag inclusion) |
| Example | 1 | D1 | W1 | F1 | C1 | Good | Absent |
| | 2 | D2 | W2 | F2 | C2 | Good | Absent |
| | 3 | D3 | W3 | F2 | C1 | Good | Absent |
| | 4 | D4 | W4 | F1 | C1 | Good | Absent |
| | 5 | D5 | W5 | F2 | C2 | Good | Absent |
| | 6 | D6 | W6 | F2 | C2 | Good | Absent |
| | 7 | D7 | W7 | F2 | C2 | Good | Absent |
| | 8 | D8 | W8 | F2 | C2 | Good | Absent |
| | 9 | D9 | W9 | F2 | C1 | Good | Absent |
| | 10 | D10 | W10 | F2 | C2 | Good | Absent |
| | 11 | D11 | W11 | F1 | C1 | Good | Absent |
| | 12 | D12 | W12 | F2 | C2 | Good | Absent |
| | 13 | D13 | W13 | F2 | C1 | Good | Absent |
| | 14 | D14 | W14 | F2 | C2 | Good | Absent |
| Comparative example | 15 | D15 | W15 | F1 | C2 | Good | Absent |
| | 16 | D16 | | F4 | C1 | Good | Absent |
| | 17 | D17 | W16 | F2 | C1 | Good | Absent |
| | 18 | D18 | | F5 | C1 | Good | Absent |
| | 19 | D19 | W17 | F2 | C2 | Good | Absent |
| | 20 | D20 | | F3 | C2 | Poor | Present |
| | 21 | D21 | W18 | F2 | C2 | Good | Absent |
| | 22 | D22 | | F6 | C2 | Poor | Present |
| | 23 | D23 | W19 | F1 | C2 | Good | Absent |
| | 24 | D24 | W20 | F1 | C2 | Good | Absent |
| | 25 | D25 | W21 | F1 | C2 | Good | Absent |
| | 26 | D26 | W22 | F1 | C2 | Good | Absent |
| | 27 | D27 | W23 | F1 | C2 | Good | Absent |
| | 28 | D28 | W24 | F2 | C1 | Good | Absent |
| | 29 | D29 | W25 | F1 | C2 | Good | Absent |

(continued)

| Class | No. | Weld metal code | Wire code | Flux code | Welding workability evaluation | | |
|---|---|---|---|---|---|---|---|
| | | | | | Welding conditions | Slag detachability | Bead wettability (Slag inclusion) |
| | 30 | D30 | W26 | F2 | C2 | Good | Absent |
| | 31 | D31 | W27 | F2 | C2 | Good | Absent |
| | 32 | D32 | W28 | F2 | C1 | Good | Absent |
| | 33 | D33 | W29 | F1 | C2 | Good | Absent |
| | 34 | D34 | W30 | F1 | C1 | Good | Absent |
| | 35 | D35 | W31 | F1 | C1 | Good | Absent |

As shown in Table 5, No. 20, in which the MgO content in the flux exceeded the upper limit and the $SiO_2$ content was less than the lower limit, was evaluated as poor in terms of welding workability. No. 22, in which the $Al_2O_3$ content in the flux was less than the lower limit and the content of a metal fluoride in terms of F exceeded the upper limit, was evaluated as poor in terms of welding workability.

Tables 6 and 7 summarize the chemical compositions of the weld metals. Values that do not fall within the range of the present invention are underlined.

[Table 6]

| Class | Weld metal code | Wire code | Flux code | Welding conditions | Weld metal composition | | | | | | | | | |
|---|---|---|---|---|---|---|---|---|---|---|---|---|---|---|
| | | | | | C | Si | Mn | P | S | Ni | Co | Cr | Mo | Ti |
| Example | D1 | W1 | F1 | C1 | 0.09 | 0.16 | 1.10 | 0.005 | 0.001 | 0.02 | < 0.01 | 2.08 | 1.01 | < 0.002 |
| | D2 | W2 | F2 | C2 | 0.11 | 0.17 | 1.15 | 0.006 | 0.001 | < 0.01 | < 0.01 | 2.10 | 1.00 | < 0.002 |
| | D3 | W3 | F2 | C1 | 0.13 | 0.15 | 1.20 | 0.005 | 0.001 | 0.01 | < 0.01 | 2.10 | 0.99 | < 0.002 |
| | D4 | W4 | F1 | C1 | 0.10 | 0.21 | 1.02 | 0.005 | 0.001 | 0.01 | < 0.01 | 2.08 | 0.99 | < 0.002 |
| | D5 | W5 | F2 | C2 | 0.12 | 0.18 | 1.10 | 0.004 | < 0.001 | 0.02 | < 0.01 | 2.07 | 1.02 | < 0.002 |
| | D6 | W6 | F2 | C2 | 0.10 | 0.17 | 1.28 | 0.004 | < 0.001 | < 0.01 | < 0.01 | 2.06 | 1.01 | < 0.002 |
| | D7 | W7 | F2 | C2 | 0.11 | 0.25 | 1.19 | 0.002 | 0.003 | 0.02 | < 0.01 | 2.02 | 1.05 | < 0.002 |
| | D8 | W8 | F2 | C2 | 0.09 | 0.26 | 1.13 | 0.004 | 0.002 | 0.03 | < 0.01 | 2.15 | 1.00 | < 0.002 |
| | D9 | W9 | F2 | C1 | 0.13 | 0.15 | 1.11 | 0.003 | 0.005 | 0.02 | < 0.01 | 2.26 | 1.01 | < 0.002 |
| | D10 | W10 | F2 | C2 | 0.10 | 0.19 | 1.06 | 0.004 | < 0.001 | < 0.01 | < 0.01 | 2.09 | 1.05 | < 0.002 |
| | D11 | W11 | F1 | C1 | 0.09 | 0.21 | 1.05 | 0.006 | 0.001 | < 0.01 | < 0.01 | 2.19 | 1.02 | < 0.002 |
| | D12 | W12 | F2 | C2 | 0.11 | 0.18 | 1.09 | 0.005 | 0.001 | 0.01 | < 0.01 | 2.03 | 0.93 | < 0.002 |
| | D13 | W13 | F2 | C1 | 0.09 | 0.20 | 1.21 | 0.005 | < 0.001 | 0.02 | < 0.01 | 2.20 | 0.96 | < 0.002 |
| | D14 | W14 | F2 | C2 | 0.12 | 0.17 | 1.17 | 0.006 | 0.001 | 0.01 | < 0.01 | 2.09 | 0.98 | < 0.002 |

(continued)

| Class | Weld metal code | Wire code | Flux code | Welding conditions | Weld metal composition | | | | | | | | | |
|---|---|---|---|---|---|---|---|---|---|---|---|---|---|---|
| | | | | | C | Si | Mn | P | S | Ni | Co | Cr | Mo | Ti |
| | D15 | W15 | F1 | C2 | 0.07 | 0.14 | 1.08 | 0.007 | < 0.001 | 0.02 | < 0.01 | 2.08 | 0.98 | < 0.002 |
| | D16 | | F4 | C1 | 0.06 | 0.13 | 1.06 | 0.006 | < 0.001 | 0.02 | < 0.01 | 2.06 | 0.99 | < 0.002 |
| | D17 | W16 | F2 | C1 | 0.16 | 0.19 | 1.19 | 0.005 | 0.001 | 0.02 | < 0.01 | 2.11 | 1.00 | < 0.002 |
| | D18 | | F5 | C1 | 0.17 | 0.22 | 1.33 | 0.005 | 0.001 | 0.02 | < 0.01 | 2.13 | 1.01 | < 0.002 |
| | D19 | W17 | F2 | C2 | 0.11 | 0.18 | 0.94 | 0.005 | 0.001 | 0.01 | < 0.01 | 2.16 | 0.99 | < 0.002 |
| | D20 | | F3 | C2 | 0.15 | 0.20 | 0.95 | 0.005 | 0.001 | 0.01 | < 0.01 | 2.20 | 1.00 | < 0.002 |
| | D21 | W18 | F2 | C2 | 0.12 | 0.14 | 1.37 | 0.004 | 0.002 | 0.03 | < 0.01 | 2.17 | 0.99 | < 0.002 |
| | D22 | | F6 | C2 | 0.12 | 0.13 | 1.35 | 0.004 | 0.002 | 0.07 | < 0.01 | 2.32 | 1.00 | < 0.002 |
| | D23 | W19 | F1 | C2 | 0.12 | 0.15 | 1.20 | 0.006 | 0.002 | 0.07 | < 0.01 | 2.05 | 0.98 | < 0.002 |
| | D24 | W20 | F1 | C2 | 0.11 | 0.17 | 1.14 | 0.008 | 0.002 | < 0.01 | 0.08 | 2.03 | 0.97 | < 0.002 |
| Comparative example | D25 | W21 | F1 | C2 | 0.09 | 0.20 | 1.09 | 0.004 | 0.004 | 0.01 | < 0.01 | 1.95 | 0.95 | < 0.002 |
| | D26 | W22 | F1 | C2 | 0.09 | 0.11 | 1.21 | 0.004 | 0.005 | 0.01 | < 0.01 | 2.35 | 0.95 | < 0.002 |
| | D27 | W23 | F1 | C2 | 0.10 | 0.16 | 1.33 | 0.005 | 0.004 | 0.02 | < 0.01 | 2.61 | 0.99 | < 0.002 |
| | D28 | W24 | F1 | C2 | 0.12 | 0.16 | 1.27 | 0.005 | 0.003 | 0.01 | < 0.01 | 2.04 | 1.00 | 0.013 |

(continued)

| Class | Weld metal code | Wire code | Flux code | Welding conditions | Weld metal composition | | | | | | | | | |
|---|---|---|---|---|---|---|---|---|---|---|---|---|---|---|
| | | | | | C | Si | Mn | P | S | Ni | Co | Cr | Mo | Ti |
| | D29 | W25 | F1 | C2 | 0.10 | 0.21 | 1.26 | 0.005 | 0.004 | 0.01 | < 0.01 | 2.13 | 0.95 | < 0.002 |
| | D30 | W26 | F2 | C2 | 0.14 | 0.14 | 1.18 | 0.005 | 0.003 | 0.01 | < 0.01 | 2.07 | 1.05 | < 0.002 |
| | D31 | W27 | F2 | C2 | 0.11 | 0.18 | 1.07 | 0.005 | 0.002 | 0.01 | < 0.01 | 2.07 | 1.03 | < 0.002 |
| | D32 | W28 | F2 | C1 | 0.11 | 0.17 | 1.17 | 0.005 | 0.002 | 0.01 | < 0.01 | 2.16 | 0.99 | < 0.002 |
| | D33 | W29 | F1 | C2 | 0.11 | 0.19 | 1.11 | 0.006 | 0.002 | 0.01 | < 0.01 | 2.03 | 1.00 | < 0.002 |
| | D34 | W30 | F1 | C1 | 0.14 | 0.18 | 1.20 | 0.007 | 0.003 | 0.02 | < 0.01 | 2.05 | 1.00 | < 0.002 |
| | D35 | W31 | F1 | C1 | 0.09 | 0.15 | 1.13 | 0.007 | 0.003 | 0.01 | < 0.01 | 2.06 | 1.01 | < 0.002 |
| ASME Sec.VIII Div.2 3..4. Supplemenal Requirement for Cr-Mo Steels Table 3.2 | | | | | 0.05-0.15 | 0.05-0.35 | 0.50-1.30 | $\leq$ 0.015 | $\leq$ 0.015 | - | - | 2.00-2.60 | 0.90-1.20 | - |

[Table 7]

| Class | Weld metal code | Wire code | Flux code | Welding conditions | Weld metal composition | | | | | | | | |
|---|---|---|---|---|---|---|---|---|---|---|---|---|---|
| | | | | | Al | V | Nb | W | Sb | Sn | As | B | O |
| Example | D1 | W1 | F1 | C1 | 0.005 | 0.38 | 0.018 | < 0.01 | 0.004 | 0.004 | 0.005 | 0.0003 | 0.039 |
| | D2 | W2 | F2 | C2 | 0.007 | 0.36 | 0.014 | < 0.01 | 0.003 | 0.003 | 0.004 | 0.0001 | 0.031 |
| | D3 | W3 | F2 | C1 | 0.004 | 0.35 | 0.015 | < 0.01 | 0.003 | 0.003 | 0.004 | 0.0001 | 0.029 |
| | D4 | W4 | F1 | C1 | 0.004 | 0.35 | 0.013 | < 0.01 | 0.003 | 0.003 | 0.003 | < 0.0001 | 0.036 |
| | D5 | W5 | F2 | C2 | 0.003 | 0.33 | 0.015 | < 0.01 | 0.002 | 0.002 | 0.003 | 0.0001 | 0.035 |
| | D6 | W6 | F2 | C2 | 0.003 | 0.36 | 0.018 | < 0.01 | 0.003 | 0.003 | < 0.002 | 0.0002 | 0.028 |
| | D7 | W7 | F2 | C2 | 0.005 | 0.35 | 0.014 | < 0.01 | 0.004 | < 0.002 | < 0.002 | 0.0001 | 0.030 |
| | D8 | W8 | F2 | C2 | 0.006 | 0.34 | 0.016 | < 0.01 | 0.002 | 0.005 | 0.002 | 0.0002 | 0.028 |
| | D9 | W9 | F2 | C1 | 0.008 | 0.33 | 0.015 | < 0.01 | 0.002 | 0.003 | 0.003 | 0.0001 | 0.031 |
| | D10 | W10 | F2 | C2 | 0.005 | 0.32 | 0.017 | < 0.01 | 0.004 | 0.002 | < 0.002 | 0.0003 | 0.027 |
| | D11 | W11 | F1 | C1 | 0.003 | 0.38 | 0.014 | < 0.01 | 0.004 | 0.004 | 0.003 | < 0.0001 | 0.030 |
| | D12 | W12 | F2 | C2 | 0.007 | 0.37 | 0.012 | < 0.01 | < 0.002 | < 0.002 | < 0.002 | 0.0001 | 0.031 |
| | D13 | W13 | F2 | C1 | 0.005 | 0.33 | 0.019 | < 0.01 | < 0.002 | < 0.002 | < 0.002 | 0.0001 | 0.035 |
| | D14 | W14 | F2 | C2 | 0.005 | 0.33 | 0.014 | < 0.01 | < 0.002 | < 0.002 | < 0.002 | 0.0005 | 0.034 |

(continued)

| Class | Weld metal code | Wire code | Flux code | Welding conditions | Weld metal composition | | | | | | | | |
|---|---|---|---|---|---|---|---|---|---|---|---|---|---|
| | | | | | Al | V | Nb | W | Sb | Sn | As | B | O |
| Comparative example | D15 | W15 | F1 | C2 | 0.006 | 0.36 | 0.020 | < 0.01 | 0.002 | 0.002 | 0.003 | < 0.0001 | 0.040 |
| | D16 | | F4 | C1 | 0.009 | 0.35 | 0.019 | < 0.01 | 0.002 | 0.002 | 0.003 | < 0.0001 | 0.054 |
| | D17 | W16 | F2 | C1 | 0.005 | 0.33 | 0.015 | < 0.01 | 0.003 | 0.003 | 0.003 | 0.0001 | 0.024 |
| | D18 | | F5 | C1 | 0.006 | 0.34 | 0.016 | < 0.01 | 0.003 | 0.003 | 0.003 | <u>0.0013</u> | <u>0.051</u> |
| | D19 | W17 | F2 | C2 | 0.005 | 0.36 | 0.012 | < 0.01 | 0.003 | 0.003 | 0.003 | 0.0002 | 0.038 |
| | D20 | | F3 | C2 | 0.005 | 0.37 | 0.014 | < 0.01 | 0.003 | 0.003 | 0.003 | 0.0002 | 0.035 |
| | D21 | W18 | F2 | C2 | 0.004 | 0.36 | 0.016 | < 0.01 | 0.002 | < 0.002 | 0.002 | 0.0002 | 0.031 |
| | D22 | | F6 | C2 | 0.005 | 0.36 | 0.015 | < 0.01 | 0.002 | < 0.002 | 0.002 | 0.0002 | 0.029 |
| | D23 | W19 | F1 | C2 | 0.006 | 0.33 | 0.014 | < 0.01 | 0.003 | 0.002 | < 0.002 | 0.0001 | 0.030 |
| | D24 | W20 | F1 | C2 | 0.008 | 0.37 | 0.015 | < 0.01 | 0.003 | 0.002 | < 0.002 | 0.0001 | 0.031 |
| | D25 | W21 | F1 | C2 | 0.003 | 0.35 | 0.014 | < 0.01 | 0.005 | 0.002 | < 0.002 | 0.0001 | 0.036 |
| | D26 | W22 | F1 | C2 | 0.005 | 0.31 | 0.015 | < 0.01 | 0.002 | 0.004 | < 0.002 | 0.0001 | 0.033 |
| | D27 | W23 | F1 | C2 | 0.005 | 0.30 | 0.015 | < 0.01 | 0.003 | 0.003 | 0.002 | 0.0002 | 0.029 |
| | D28 | W24 | F1 | C2 | 0.008 | 0.33 | 0.015 | < 0.01 | 0.002 | 0.002 | 0.003 | 0.0001 | 0.024 |

(continued)

| Class | Weld metal code | Wire code | Flux code | Welding conditions | Weld metal composition | | | | | | | | |
|---|---|---|---|---|---|---|---|---|---|---|---|---|---|
| | | | | | Al | V | Nb | W | Sb | Sn | As | B | O |
| | D29 | W25 | F1 | C2 | <u>0.012</u> | 0.33 | 0.020 | < 0.01 | 0.002 | 0.002 | 0.002 | 0.0003 | 0.022 |
| | D30 | W26 | F2 | C2 | 0.004 | <u>0.28</u> | 0.013 | < 0.01 | 0.002 | 0.002 | < 0.002 | 0.0001 | 0.030 |
| | D31 | W27 | F2 | C2 | 0.007 | <u>0.42</u> | 0.018 | < 0.01 | 0.003 | 0.003 | 0.002 | 0.0001 | 0.029 |
| | D32 | W28 | F2 | C1 | 0.005 | 0.36 | <u>0.010</u> | < 0.01 | 0.003 | 0.003 | < 0.002 | 0.0001 | 0.037 |
| | D33 | W29 | F1 | C2 | 0.004 | 0.32 | <u>0.024</u> | < 0.01 | < 0.002 | < 0.002 | < 0.002 | 0.0002 | 0.028 |
| | D34 | W30 | F1 | C1 | 0.004 | 0.35 | 0.018 | <u>0.06</u> | < 0.002 | < 0.002 | < 0.002 | 0.0002 | 0.030 |
| | D35 | W31 | F1 | C1 | 0.006 | 0.39 | 0.015 | < 0.01 | < 0.002 | < 0.002 | < 0.002 | <u>0.0008</u> | 0.025 |
| ASME Sec.VIII Div.2 3.4. Supplemenal Requirement for Cr-Mo Steels Table 3.2 | | | | | - | 0.20-0.40 | 0.010-0.040 | - | - | - | - | - | - |

[Determination of Chemical Composition of Weld Metal]

A sample used for determining a chemical composition was cut from the center of a weld metal formed on a groove portion of each as-weld test material. The samples were each subjected to a chemical composition analysis by absorption spectrophotometry (B), a combustion-infrared absorption method (C and S), an inert gas fusion-thermal conductivity method (O), or inductively coupled plasma emission spectroscopy (elements other than the above). Tables 6 and 7 summarize the chemical compositions.

[PWHT]

Fig. 2 illustrates various conditions under which the weld-testing materials were subjected to a PWHT. The intensity of the PWHT can be quantified under the concept of the Larson-Miller heat-treatment parameter (hereinafter, abbreviated as "[P]"). [P] can be represented by Expression 1 below, where T represents a PWHT temperature (°C) and t represents a PWHT time (h).

[Math. 1]

$$[P] = (T + 273) \times (20 + \log t) \times 10^{-3} \ ... \ (\text{Expression 1})$$

In other words, the higher the PWHT temperature or the longer the PWHT time, the larger the value of [P] and the more the degree to which the deposited metal is annealed. In particular, a large [P] promotes aggregation and coarsening of a carbonitride, which plays an important role in increasing the strength of a low-alloy heat-resisting steel such as Cr-Mo steel, and consequently reduces the strength of the deposited metal. On the other hand, the reduction in the strength of the deposited metal, which is due to the increase in [P], increases the toughness of the deposited metal in an inversely proportional manner. However, in some cases, if excessive aggregation and coarsening of a carbonitride occur, the coarse carbonitride may act as the origin of brittle fracture, which reduces toughness conversely. The strength and toughness of the weld metal vary substantially linearly with respect to [P] similarly to high-temperature strength such as creep rupture strength.

In the present invention, a PWHT was performed under the following conditions: (1) 705 ($\pm$ 15)°C $\times$ 8 ($\pm$ 1) h, (2) 705 ($\pm$ 15)°C $\times$ 24 ($\pm$ 1) h, and (3) 705 ($\pm$ 15)°C $\times$ 32 ($\pm$ 1) h. The ranges of [P] which correspond to these PWHT conditions are (1) 20.07 to 20.81, (2) 20.57 to 21.25, and (3) 20.70 to 21.37.

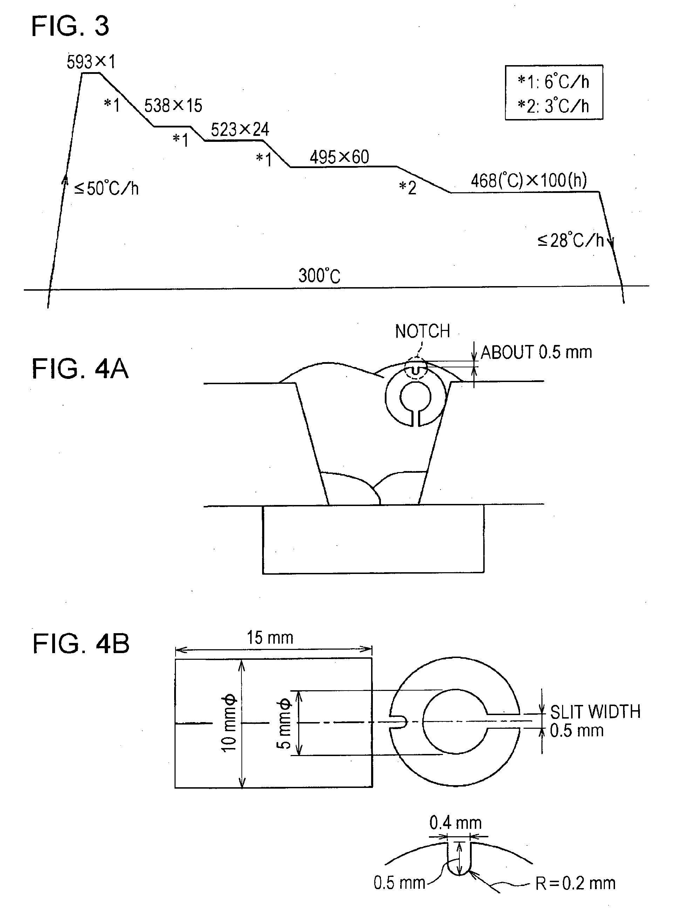

The test materials used in an evaluation of the temper embrittlement property of the deposited metal were subjected to a special embrittlement-promoting heat-treatment, which is referred to as "step cooling" ((S.C.), Fig. 3) below.

Note that,

PWHT (705°C $\times$ 8 h): Charpy impact test (conditions (a) illustrated in Fig. 2),
PWHT (705°C $\times$ 8 h) + S.C.: Charpy impact test (for an evaluation of temper embrittlement property),
PWHT (705°C $\times$ 24 h): Creep rupture test (conditions (b) illustrated in Fig. 2), and
PWHT (705°C $\times$ 32 h): Creep rupture test and room-temperature strength test (conditions (c) illustrated in Fig. 2).

<Step Cooling>

Step cooling is described below. Fig. 3 illustrates a graph for describing conditions under which step cooling was performed, where the vertical axis shows temperature and the horizontal axis shows time. As illustrated in Fig. 3, in step cooling, the heating conditions were controlled when the temperature of the test material exceeded 300°C so that the heating rate was set to 50°C/h or less. The test material was heated until the temperature of the test material reached 593°C and then held at 593°C for 1 hour. The test material was cooled to 538°C at a cooling rate of 6°C/h and subsequently held for 15 hours. The test material was again cooled to 523°C at the same cooling rate and then held for 24 hours. The test material was further cooled to 495°C at the same cooling rate and then held for 60 hours. The test material was cooled to 468°C at a cooling rate of 3°C/h and subsequently held for 100 hours. The test material was cooled at a cooling rate of 28°C/h or less until the temperature of the test material reached 300°C or less. In this treatment, the heating rate and cooling rate were not limited when the temperature of the test material was 300°C or less.

[Toughness and Temper Embrittlement Property (Charpy Impact Test)]

The toughness and temper embrittlement property of each deposited metal were evaluated in the following manner. Charpy impact test pieces having a 2-mm-V notch conforming to ISO 148-1 were taken from both test material prepared under PWHT conditions of 705°C $\times$ 8 h and test material prepared under PWHT conditions of 705°C $\times$ 8 h +

step cooling. Three test pieces were subjected to a Charpy impact test at 20°C, 0°C, -18°C, -30°C, -50°C, -70°C, and -90°C. A Charpy transition temperature at 54 J (hereinafter, denoted as "vTr54" or "vTr'54") was determined from each of transition curves that smoothly passed the test results measured at the respective temperatures. A variation in vTr54 (= vTr'54 - vTr54, hereinafter, denoted as "ΔvTr54"), which was caused due to step cooling, was calculated as the degree of embrittlement.

The temper embrittlement sensitivity of each weld metal was determined from both vTr54 and ΔvTr54 in a comprehensive manner. The sum of vTr54 and three times ΔvTr54 (= vTr54 + 3ΔvTr54) was defined as a temper embrittlement property value.

This is to approximate a Charpy transition temperature at which the deposited metal that had been subjected to a long service period exhibited 54 J on the assumption that the degree of embrittlement that may occur in the actual deposited metal is three times the degree of the embrittlement caused due to step cooling considering that step cooling is an accelerated test and the service lives of actual machines are several tens of years. Thus, was approximately estimated. The coefficient of ΔvTr54 (in the present invention, 3) has been increased to 1.5, 2.0, 2.5, and then 3.0 from year to year as well as creep property, and a coefficient of 3 is substantially the most severe among the recent requirements. When the degree of embrittlement (= ΔvTr54) is small but vTr54 is large, the value of vTr54 + 3ΔvTr54 becomes large. Thus, it is not preferable to apply the deposited metal, which requires a high and consistent weld quality, at the position. On the other hand, when toughness measured after the PWHT (= vTr54) is high but the degree of embrittlement (= ΔvTR54) is large, the value of vTr54 + 3ΔvTr54 also becomes large. Thus, it is not preferable to apply the deposited metal due to the same reason as described above.

In Examples, toughness was evaluated in accordance with the following criteria: an evaluation of "Good" was given when a three-point average impact value at -30°C (hereinafter, denoted as "vE-30°C") was 70 J or more; an evaluation of "Fair" was given when vE-30°C was 54 J or more and less than 70 J; and an evaluation of "Poor" was given when vE-30°C was less than 54 J.

A temper embrittlement property value was evaluated in accordance with the following criteria: an evaluation of "Good" was given when the value of vTr54 + 3ΔvTr54 was less than -10°C; an evaluation of "Fair" was given when the value of vTr54 + 3ΔvTr54 was -10°C or more and 10°C or less; and an evaluation of "Poor" was given when the value of vTr54 + 3ΔvTr54 was more than 10°C.

Where,

vTr54: Charpy transition temperature (°C) at which 54 J was exhibited after the PWHT

vTr'54: Charpy transition temperature (°C) at which 54 J was exhibited after the PWHT + step cooling

ΔvTr54 (= vTr'54 - vTr54): Degree (°C) of embrittlement caused due to step cooling

vTr54 + 3ΔvTr54: Temper embrittlement property (°C)

[Creep Rupture Test]

A creep rupture test piece (diameter: 13 mm, G.L. = 65 mm) conforming to ISO 204 was taken from both the weld-testing material prepared under PWHT conditions of 705°C × 24 h and the weld-testing material prepared under PWHT conditions of 705°C × 32 h. The creep rupture test pieces were subjected to a creep rupture test at a testing temperature of 540°C with an applied stress of 210 MPa, and the rupture time was determined. In Examples, an evaluation of "Good" was given when the amount of time between the end of the PWHT of 705°C × 24 h and rupture (hereinafter, denoted as "Tr") exceeded 1000 h, an evaluation of "Fair" was given when Tr was 1000 h or less and 900 h or more, and an evaluation of "Poor" was given when Tr was less than 900 h. In Tables, the symbol "-" denotes that the test was omitted. When the test was conducted using two test materials, an evaluation of "Good" was given when the Tr's of the test materials both exceeded 1000 h or when the Tr of one of the test materials exceeded 1000 h and the Tr of the other test material was 1000 h or less and 900 h or more.

[SR Cracking Resistance Evaluation Test (C-ring Type Cracking Test)]

In the production of pressure containers made of low-alloy heat-resistant steel such as Cr-Mo steel, SR (stress relief: stress relief annealing) is commonly performed prior to a PWHT primarily in order to reduce a residual stress caused in the structure during the production. SR cracking may occur at the prior-austenite grain boundaries during SR. Co-occurrence of precipitation of a carbide at the crystal grains due to SR and segregation of impurities at the prior-austenite grain boundaries causes an excessive difference in strength between the inside of the crystal grains and the prior-austenite grain boundaries at the interface therebetween. The relatively weakened prior-austenite grain boundaries become incapable of withstanding the residual stress, which may cause SR cracking to occur.

A test method used for evaluating the SR cracking resistance of the deposited metal in the present invention was a C-ring type cracking test. A ring-shaped test piece having a U-groove (U-notch) and a slit (slit width: 0.5 mm) was taken from an as-welded weld-testing material at the position indicated in Fig. 4A (= position at which the final-pass as-casted zone was located directly below the U-notch). The number of tests was two. Fig. 4B illustrates the shape of the test piece used.

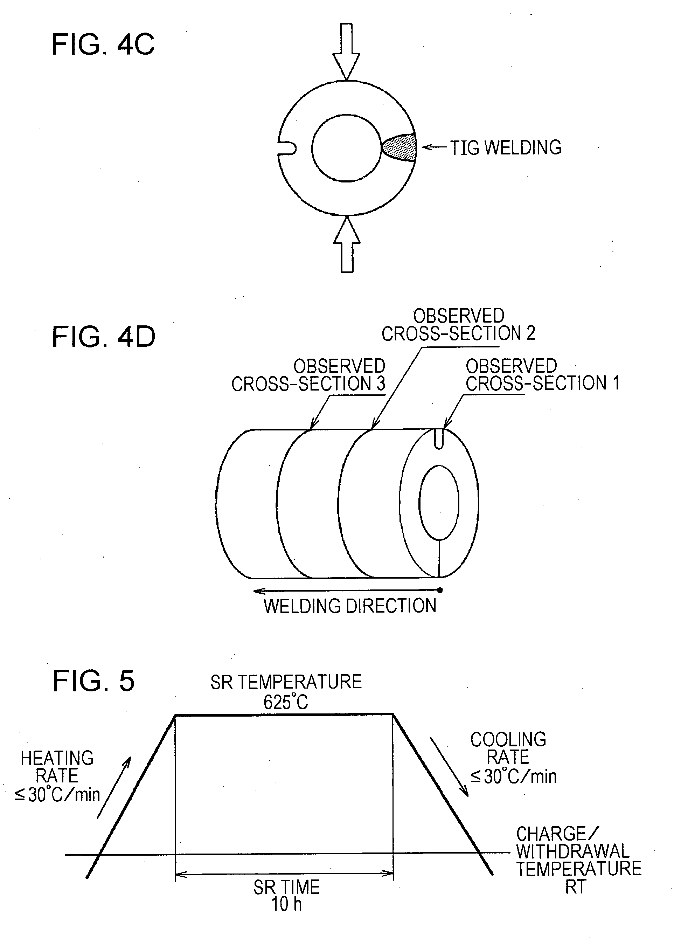

TIG welding was performed at the slit while the width of the slit was reduced to about 0.05 mm by crimping as illustrated in Fig. 4C in order to apply a residual stress directly below the U-groove. After TIG welding, the test piece was subjected to SR (625°C × 10 h) under the conditions illustrated in Fig. 5. Subsequently, the test piece was divided into three portions in the longitudinal direction as illustrated in Fig. 4D. A portion of each cross-section which was directly below the notch was observed in order to determine the presence or absence of SR cracks formed at the prior-austenite grain boundaries. An evaluation of "Absent" was given when no SR cracks were observed in the six cross-sections observed (= three observed cross-sections × two tests), and an evaluation of "Present" was given when the number of cross sections on which SR cracks were present was one or more.

[Diffusible Hydrogen Content]

The diffusible hydrogen content was determined in accordance with AWSA4.3, which specifies a method for measuring the diffusible hydrogen in a weld metal. An evaluation of "Good" was given when the diffusible hydrogen content was 4 ml/100 g or less, and an evaluation of "Poor" was given when the diffusible hydrogen content exceeded 4 ml/100 g.

[Room-Temperature Strength]

In an evaluation of room-temperature strength, a tensile test piece (diameter: 10 mm, G.L. = 50 mm) conforming to ISO6892 was taken from each of the weld-testing materials prepared under PWHT conditions of 705°C × 32 h, and the tensile strength of the test piece was measured. An evaluation of "Good" was given when the tensile strength was 620 MPa or more and 660 MPa or less, and an evaluation of "Fair" was given when the tensile strength was less than 620 MPa or more than 660 MPa.

Tables 8 and 9 summarize the results. Table 10 summarizes methods of mechanical testing of the weld metal.

[Table 8]

| Class | No. | Weld metal code | Diffusible hydrogen content | | Toughness (Avg.n=3) | | Room temperature | | Temper embrittlement property | | | | | Creep rupture property (540°C/210 MPa) | | | SR cracking resistance | Overall evaluation |
|---|---|---|---|---|---|---|---|---|---|---|---|---|---|---|---|---|---|---|
| | | | As-Weld | Evaluation | 705°C × 8 hr | Evaluation | 705°C × 32 hr | Evaluation | 705°C × 8 hr + Step Cooling | | | | Evaluation | 705°C × 24hr | 705°C × 32hr | Evaluation | 625°C × 10hr | |
| | | | Hd/ (ml/100g) | | vE-30°C/J | | TS/MPa | | vTr54J | vTr'54J | $\Delta$vTr54J *2 | vTr54J + 3$\Delta$Tr54 J /°C | | Tr/hr | Tr/hr | | - | - |
| Example | 1 | D1 | 2.2 | Good | 111 | Good | 630 | Good | -50 | -50 | 0 | -50 | Good | 1251 | - | Good | Absent | Good |
| | 2 | D2 | 1.9 | Good | 91 | Good | 642 | Good | -43 | -45 | 0 | -43 | Good | 1303 | 1108 | Good | Absent | Good |
| | 3 | D3 | 2.5 | Good | 73 | Good | 651 | Good | -37 | -29 | 8 | -13 | Good | 1185 | 1076 | Good | Absent | Good |
| | 4 | D4 | 2.7 | Good | 63 | Fair | 638 | Good | -35 | -32 | 3 | -26 | Good | 1397 | 1144 | Good | Absent | Fair |
| | 5 | D5 | 1.5 | Good | 95 | Good | 639 | Good | -47 | -51 | 0 | -47 | Good | 1209 | - | Good | Absent | Fair |
| | 6 | D6 | 2.4 | Good | 127 | Good | 655 | Good | -54 | -43 | 11 | -21 | Good | 983 | - | Fair | Absent | Good |
| | 7 | D7 | 2.5 | Good | 79 | Good | 633 | Good | -41 | -39 | 2 | -35 | Good | 1222 | - | Good | Absent | Good |
| | 8 | D8 | 2.0 | Good | 78 | Good | 629 | Good | -35 | -35 | 0 | -35 | Good | 1109 | - | Good | Absent | Good |
| | 9 | D9 | 1.9 | Good | 107 | Good | 635 | Good | -48 | -49 | 0 | -48 | Good | 916 | - | Fair | Absent | Fair |
| | 10 | D10 | 1.8 | Good | 128 | Good | 622 | Good | -56 | -50 | 6 | -38 | Good | 1073 | 910 | Good | Absent | Good |
| | 11 | D11 | 1.9 | Good | 82 | Good | 645 | Good | -42 | -45 | 0 | -42 | Good | 1238 | - | Good | Absent | Good |
| | 12 | D12 | 2.0 | Good | 133 | Good | 627 | Good | -53 | -41 | 12 | -17 | Good | 1008 | - | Good | Absent | Good |
| | 13 | D13 | 2.1 | Good | 88 | Good | 660 | Good | -46 | -47 | 0 | -46 | Good | 1401 | 1115 | Good | Absent | Good |
| | 14 | D14 | 1.8 | Good | 91 | Good | 649 | Good | -44 | -40 | 4 | -32 | Good | 1232 | 1086 | Good | Absent (voids were present) | Fair |

*1) Mechanical tests were omitted due to poor workability.

*2) $\Delta$vTr54J=vTr'54J-vTr54J ($\Delta$vTr54J was evaluated as 0 when it was less than 0)

[Table 9]

| Class | No. | Weld metal code | Diffusible hydrogen content | | Toughness (Avg.n=3) | | Room temperature | | Temper embrittlement property | | | | | Creep rupture property (540°C/210 MPa) | | | SR cracking resistance | Overall evaluation |
|---|---|---|---|---|---|---|---|---|---|---|---|---|---|---|---|---|---|---|
| | | | As-Weld | | 705°C × 8 hr | | 705°C × 32 hr | | 705°C × 8 hr + Step Cooling | | | | | 705°C × 24 hr | 705°C × 32 hr | | | |
| | | | Hd (ml/100g) | Evaluation | vE-30°C/J | Evaluation | TS/MPa | Evaluation | vTr54J | vTr'54J | ΔvTr54J *2 | vTr54J + 3ΔvTr54J /°C | Evaluation | Tr / hr | Tr / hr | Evaluation | 625°C × 10hr | |
| Comparative example | 15 | D15 | 2.0 | Good | 45 | Poor | 619 | Fair | -26 | -13 | 13 | 13 | Poor | 773 | - | Poor | Absent | Poor |
| | 16 | D16 | 3.3 | Good | 32 | Poor | 615 | Fair | -22 | -10 | 12 | 14 | Poor | 602 | - | Poor | Absent | Poor |
| | 17 | D17 | 2.1 | Good | 29 | Poor | 661 | Fair | -23 | -17 | 6 | -5 | Fair | 1238 | - | Good | Absent | Poor |
| | 18 | D18 | 2.2 | Good | 42 | Poor | 669 | Fair | -23 | -11 | 12 | 13 | Poor | 870 | - | Poor | Present | Poor |
| | 19 | D19 | 1.8 | Good | 50 | Poor | 634 | Good | -35 | -33 | 2 | -29 | Good | 1255 | - | Good | Absent | Poor |
| | 20 | D20*1 | 3.0 | Good | | | | | | | | | | | | | | Poor |
| | 21 | D21 | 1.9 | Good | 103 | Good | 649 | Good | -50 | -38 | 12 | -14 | Good | 737 | - | Poor | Absent | Poor |
| | 22 | D22*1 | 4.9 | Poor | | | | | | | | | | | | | | Poor |
| | 23 | D23 | 1.9 | Good | 94 | Good | 645 | Good | -40 | -29 | 11 | -7 | Fair | 634 | - | Poor | Absent | Poor |
| | 24 | D24 | 2.3 | Good | 73 | Good | 633 | Good | -33 | -31 | 2 | -27 | Good | 804 | - | Poor | Absent | Poor |
| | 25 | D25 | 2.5 | Good | 29 | Poor | 630 | Good | -12 | -6 | 6 | 6 | Fair | 1206 | - | Good | Absent | Poor |
| | 26 | D26 | 1.7 | Good | 131 | Good | 635 | Good | -60 | -48 | 12 | -24 | Good | 602 | - | Poor | Absent | Poor |
| | 27 | D27 | 1.6 | Good | 155 | Good | 615 | Fair | -65 | -53 | 12 | -29 | Good | 557 | - | Poor | Absent | Poor |
| | 28 | D28 | 2.0 | Good | 27 | Poor | 671 | Fair | -10 | -3 | 7 | 11 | Poor | 1435 | - | Good | Absent | Poor |
| | 29 | D29 | 2.1 | Good | 49 | Poor | 620 | Good | -26 | -23 | 3 | -17 | Good | 1049 | - | Good | Absent | Poor |
| | 30 | D30 | 1.8 | Good | 80 | Good | 614 | Fair | -51 | -55 | 0 | -51 | Good | 499 | - | Poor | Absent | Poor |
| | 31 | D31 | 1.9 | Good | 51 | Poor | 657 | Good | -27 | -29 | 0 | -27 | Good | 1242 | - | Good | Present | Poor |
| | 32 | D32 | 2.1 | Good | 141 | Good | 611 | Fair | -63 | -49 | 14 | -21 | Good | 714 | - | Poor | Absent | Poor |

(continued)

| Class | No. | Weld metal code | Diffusible hydrogen content | | Toughness (Avg.n=3) | | Room temperature | | Temper embrittlement property | | | | | Creep rupture property (540°C/210 MPa) | | | SR cracking resistance | Overall evaluation |
| | | | As-Weld | Evaluation | 705°C×8 hr | Evaluation | 705°C×32 hr | Evaluation | 705°C × 8 hr + Step Cooling | | | | Evaluation | 705°C ×24 hr | 705°C ×32 hr | Evaluation | 625°C ×10hr | |
| | | | Hd (ml/100g) | | vE-30°C/J | | TS/MPa | | vTr54J | vTr'54J | ΔvTr54J *2 | vTr54J + 3ΔvTr54J /°C | | Tr / hr | Tr / hr | | | |
| | 33 | D33 | 2.3 | Good | 40 | Poor | 658 | Good | -19 | -17 | 2 | -13 | Good | 1536 | - | Good | Present | Poor |
| | 34 | D34 | 2.3 | Good | 79 | Good | 644 | Good | -45 | -33 | 12 | -9 | Fair | 789 | - | Poor | Absent | Poor |
| | 35 | D35 | 1.9 | Good | 103 | Good | 621 | Good | -50 | -50 | 0 | -50 | Good | 1269 | - | Good | Present | Poor |

*1) Mechanical tests were omitted due to poor workability.
*2) $\Delta vTr54J = vTr'54J - vTr54J$ ($\Delta vTr54J$ was evaluated as 0 when it was less than 0)

[Table 10]

| Methods of Mechanical Testing of Weld Metal | | | | |
|---|---|---|---|---|
| Test items | | PWHT conditions | Position at which test piece was taken | Test standard |
| Tensile test | RT | 705°C × 32 h (Fig. 2) | Center of sheet thickness | ISO 6892 Metallic materials-Tensile testing |
| Charpy impact test | -30°C | 705°C × 8 hr (Fig. 2) | Center of sheet thickness | ISO 148-1 Metallic materials-Charpy pendulum impact test-Part 1: Test Method |
| Temper embrittlement test | | 705°C × 8 hr (Fig. 2) + Step Cooling (Fig. 3) | Center of sheet thickness | ISO 148-1 Metallic materials-Charpy pendulum impact test-Part 1: Test Method; and API Recommended Practice 934-A 6 Welding Conusmable requirements |
| Creep rupture test | 540°C/210 MPa | 705°C × 24 hr (Fig. 2) | Center of sheet thickness | ISO 204 Metallic materials-Uniaxial creep testing in tension-Method of test |
| | | 705°C × 32 hr (Fig. 2) | Center of sheet thickness | Same as above |
| SR cracking test | | 625°C × 10 hr (Fig. 5) | Final pass | SR cracking test using a cylindrical test piece (Fig. 5) |
| Diffusible hydrogen content | | As-weld | - | AWS A4.3 Standard Methods for Determination of the Diffusible Hydrogen Content of Martensitic, Bainitic, and Ferritic Steel Weld Metal Produced by Arc Welding. |

As shown in Tables 8 and 9, Nos. 1 to 14, which fall within the range of the present invention, were evaluated as good on all of the evaluation items.

On the other hand, Nos. 15 to 35, which do not fall within the range of the present invention, were evaluated as follows.

No. 15, in which the C content in the weld metal was less than the lower limit, was evaluated as poor in terms of toughness, temper embrittlement property, and creep rupture property. No. 16, in which the C content in the weld metal was less than the lower limit, the O content in the weld metal exceeded the upper limit, the $Al_2O_3$ content and the metal carbonate content in terms of $CO_2$ in the flux exceeded the respective upper limits, and the metal fluoride content in terms of F in the flux was less than the lower limit, was evaluated as poor in terms of toughness, temper embrittlement property, and creep rupture property.

No. 17, in which the C content in the weld metal exceeded the upper limit, was evaluated as poor in terms of toughness. No. 18, in which the C content and the O content in the weld metal exceeded the respective upper limits, the $SiO_2$ content in the flux exceeded the upper limit, and the MgO content in the flux was less than the lower limit, was evaluated as poor in terms of toughness. In No. 18, furthermore, the Mn content exceeded the upper limit, which deteriorated temper embrittlement property, and the B content exceeded the upper limit, which deteriorated SR cracking resistance. The Mn content exceeding the upper limit also deteriorated creep rupture property.

No. 19, in which the Mn content in the weld metal was less than the lower limit, was evaluated as poor in terms of toughness. In No. 20, the mechanical testing was not conducted due to poor welding workability. No. 21, in which the Mn content in the weld metal exceeded the upper limit, was evaluated as poor in terms of creep rupture property. In No. 21, furthermore, the Mn content exceeded the upper limit, which increased the degree of embrittlement (ΔvTr54J). However, No. 21 was evaluated as "Good" in terms of temper embrittlement because vTr54 was sufficiently small while Δ was increased due to the impact of Mn.

In No. 22, the mechanical testing was not conducted due to poor welding workability. In addition, the diffusible hydrogen content was high. No. 23, in which the Ni content in the weld metal exceeded the upper limit, was evaluated as poor in terms of creep rupture property. No. 24, in which the Co content in the weld metal exceeded the upper limit, was evaluated as poor in terms of creep rupture property.

No. 25, in which the Cr content in the weld metal was less than the lower limit, was evaluated as poor in terms of toughness. No. 26, in which the Cr content in the weld metal exceeded the upper limit, was evaluated as poor in terms of creep rupture property. No. 27, in which the Mn content and the Cr content in the weld metal exceeded the respective upper limits, was evaluated as poor in terms of creep rupture property. In No. 27, furthermore, the Mn content exceeded the upper limit, which increased the degree of embrittlement ($\Delta$vTr54J). However, No. 27 was evaluated as "Good" in terms of temper embrittlement because vTr54 was sufficiently small while $\Delta$ was increased due to the impact of Mn. No. 28, in which the Ti content in the weld metal exceeded the upper limit, was evaluated as poor in terms of toughness and temper embrittlement property.

No. 29, in which the Al content in the weld metal exceeded the upper limit, was evaluated as poor in terms of toughness. NO. 30, in which the V content in the weld metal was less than the lower limit, was evaluated as poor in terms of creep rupture property. NO. 31, in which the V content in the weld metal exceeded the upper limit, was evaluated as poor in terms of toughness and SR cracking resistance.

NO. 32, in which the Nb content in the weld metal was less than the lower limit, was evaluated as poor in terms of creep rupture property. NO. 33, in which the Nb content in the weld metal exceeded the upper limit, was evaluated as poor in terms of toughness and SR cracking resistance. NO. 34, in which the W content in the weld metal exceeded the upper limit, was evaluated as poor in terms of creep rupture property. NO. 35, in which the B content in the weld metal exceeded the upper limit, was evaluated as poor in terms of SR cracking resistance.

The present invention is described above in detail with reference to the embodiments and Examples. However, the scope of the present invention is not limited to the above description, and the scope of right should be broadly interpreted on the basis of the description of Claims. In addition, it is apparent that various modifications, alterations, and the like can be made on the basis of the foregoing description.

**Claims**

1. A submerged arc welding wire for high-strength 2.25Cr-1Mo-V steel, the submerged arc welding wire comprising:

   C: 0.11% to 0.18% by mass;
   Si: 0.05 to 0.35% by mass;
   Mn: 1.00% to 1.40% by mass;
   P: $\leq$ 0.015% by mass;
   S: $\leq$ 0.015% by mass;
   Ni: $\leq$ 0.07% by mass;
   Co: $\leq$ 0.07% by mass;
   Cr: 2.00% to 2.30% by mass;
   Mo: 0.90% to 1.20% by mass;
   Ti: $\leq$ 0.025% by mass;
   Al: $\leq$ 0.025% by mass;
   V: 0.33% to 0.43% by mass;
   Nb: 0.015% to 0.030% by mass;
   W: $\leq$ 0.05% by mass; and
   B: $\leq$ 0.0005% by mass,
   with the balance being Fe and inevitable impurities.

2. The submerged arc welding wire for high-strength 2.25Cr-1Mo-V steel according to Claim 1, the submerged arc welding wire being used in combination with a sintered flux containing
   MgO: 25% to 40% by mass,
   $Al_2O_3$: 13% to 30% by mass,
   $SiO_2$: 3% to 15% by mass,
   metal fluoride in terms of F: 3% to 15% by mass,
   metal carbonate in terms of $CO_2$: 3% to 15% by mass,
   C: $\leq$ 0.10% by mass,
   Si + Mn: $\leq$ 3.0% by mass,
   Ni + Co + Cr + Mo + Ti + Al + V + Nb + W: < 1.0% by mass, and
   total of B and boron oxide in terms of B: < 0.10% by mass.

**3.** A weld metal produced using the submerged arc welding wire for high-strength 2.25Cr-1Mo-V steel according to Claim 1 in combination with the sintered flux according to Claim 2, the weld metal comprising:

C: 0.09% to 0.14% by mass;
Si: 0.05% to 0.35% by mass;
Mn: 1.00% to 1.30% by mass;
P: $\leq$ 0.015% by mass;
S: $\leq$ 0.015% by mass;
Ni: $\leq$ 0.06% by mass;
Co: $\leq$ 0.06% by mass;
Cr: 2.00% to 2.30% by mass;
Mo: 0.90% to 1.20% by mass;
Ti: $\leq$ 0.010% by mass;
Al: $\leq$ 0.010% by mass;
V: 0.30% to 0.40% by mass;
Nb: 0.012% to 0.022% by mass;
W: $\leq$ 0.05% by mass;
B: $\leq$ 0.0005% by mass; and
O: $\leq$ 0.045% by mass,
with the balance being Fe and inevitable impurities.

FIG. 1A

10°

25 mm

25 mm

FIG. 1B

10°

25 mm

19 mm

FIG. 2

PWHT TEMPERATURE
705°C

HEATING
RATE
≦55°C/h

COOLING
RATE
≦55°C/h

LOWER
TEMPERATURE
LIMIT FOR
TEMPERATURE
CONTROL 300°C

PWHT TIME
(a) 8 h, (b) 24 h, (c) 32 h

## FIG. 3

593×1

*1    538×15

*1    523×24

*1    495×60

≤50°C/h        *2    468(°C)×100(h)

≤28°C/h

300°C

*1: 6°C/h
*2: 3°C/h

## FIG. 4A

NOTCH

ABOUT 0.5 mm

## FIG. 4B

15 mm

10 mmφ

5 mmφ

SLIT WIDTH
0.5 mm

0.4 mm

0.5 mm    R=0.2 mm

## FIG. 4C

TIG WELDING

## FIG. 4D

OBSERVED CROSS-SECTION 2

OBSERVED CROSS-SECTION 3

OBSERVED CROSS-SECTION 1

WELDING DIRECTION

## FIG. 5

SR TEMPERATURE 625°C

HEATING RATE ≤ 30°C/min

COOLING RATE ≤ 30°C/min

CHARGE/ WITHDRAWAL TEMPERATURE RT

SR TIME 10 h

## INTERNATIONAL SEARCH REPORT

| International application No. |
| --- |
| PCT/JP2013/084687 |

**A. CLASSIFICATION OF SUBJECT MATTER**
*B23K35/30(2006.01)i, B23K35/362(2006.01)i*

According to International Patent Classification (IPC) or to both national classification and IPC

**B. FIELDS SEARCHED**

Minimum documentation searched (classification system followed by classification symbols)
B23K35/30, B23K35/362

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2012/108517 A1 (Kobe Steel, Ltd.), 16 August 2012 (16.08.2012), claims; paragraphs [0023] to [0032], [0054] to [0056]; tables 1 to 6 & JP 2012-166203 A | 1-3 |
| X | WO 2012/124529 A1 (Kobe Steel, Ltd.), 20 September 2012 (20.09.2012), claims; paragraphs [0024] to [0033], [0051] to [0053]; tables 1 to 6 & JP 2012-187619 A | 1-3 |

☒ Further documents are listed in the continuation of Box C.　　　☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>　　25 March, 2014 (25.03.14) | Date of mailing of the international search report<br>　　08 April, 2014 (08.04.14) |
| --- | --- |
| Name and mailing address of the ISA/<br>　　Japanese Patent Office | Authorized officer |
| Facsimile No. | Telephone No. |

Form PCT/ISA/210 (second sheet) (July 2009)

37

**INTERNATIONAL SEARCH REPORT**

| International application No. |
| --- |
| PCT/JP2013/084687 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 6-328292 A  (Kobe Steel, Ltd.), 29 November 1994 (29.11.1994), claims; paragraphs [0010] to [0040]; tables 2 to 9 & US 5430269 A         & EP 626227 A1 & KR 10-1997-0010882 B | 1-3 |
| A | JP 8-150478 A  (Kobe Steel, Ltd.), 11 June 1996 (11.06.1996), claims; paragraphs [0011] to [0035]; tables 1 to 8 (Family: none) | 1-3 |
| A | JP 2-84293 A  (Kobe Steel, Ltd.), 26 March 1990 (26.03.1990), claims; page 3, lower left column to lower right column; tables 2 to 10 (Family: none) | 1-3 |
| A | WO 2010/066981 A1  (L'AIR LIQUIDE SOCIETE ANONYME POUR L'ETUDE ET L'EXPLOITATION DES PROCEDES GEORGES CLAUDE), 17 June 2010 (17.06.2010), claims; tables 3 to 6 & JP 2012-511431 A       & EP 2376256 A & FR 2939340 A1         & CN 102112270 A & KR 10-2011-0091847 A | 1-3 |
| A | WO 2012/070524 A1  (Kobe Steel, Ltd.), 31 May 2012 (31.05.2012), claims; tables 1 to 9 & JP 2012-110932 A      & EP 2610029 A1 & CN 103153529 A | 1-3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1271096 A
- JP 3258490 A

- JP 8150478 A